(19) Europäisches Patentamt
European Patent Office
Office européen des brevets

(11) EP 1 964 881 A1

(12) **EUROPEAN PATENT APPLICATION**
published in accordance with Art. 158(3) EPC

(43) Date of publication:
**03.09.2008 Bulletin 2008/36**

(21) Application number: **06833310.3**

(22) Date of filing: **25.11.2006**

(51) Int Cl.:
***C08L 1/10*** *(2006.01)* ***B29C 47/14*** *(2006.01)*
***C08J 5/18*** *(2006.01)* ***G02B 5/30*** *(2006.01)*
***G02F 1/1335*** *(2006.01)* ***B29K 1/00*** *(2006.01)*
***B29L 7/00*** *(2006.01)* ***B29L 11/00*** *(2006.01)*

(86) International application number:
**PCT/JP2006/323506**

(87) International publication number:
**WO 2007/072654 (28.06.2007 Gazette 2007/26)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **21.12.2005 JP 2005367675**

(71) Applicant: **Konica Minolta Opto, Inc.**
**Hachioji-shi,**
**Tokyo 192-8505 (JP)**

(72) Inventors:
- **NAKAMURA, Kazuaki**
  **Tokyo 191-8511 (JP)**
- **MIURA, Norio**
  **Tokyo 191-8511 (JP)**
- **SUZUKI, Takayuki**
  **Tokyo 191-8511 (JP)**
- **KONISHI, Takashi**
  **Tokyo 191-8511 (JP)**
- **KAWABE, Satomi**
  **Tokyo 191-8511 (JP)**
- **TAKEDA, Akihiko**
  **Tokyo 191-8511 (JP)**
- **KIYOHARA, Kazuto**
  **Tokyo 191-8511 (JP)**

(74) Representative: **McCluskie, Gail Wilson**
**J.A. Kemp & Co.**
**14 South Square**
**Gray's Inn**
**London WC1R 5JJ (GB)**

(54) **COMPOSITION, OPTICAL FILM, PROCESS FOR PRODUCING OPTICAL FILM, POLARIZATION PLATE AND LIQUID CRYSTAL DISPLAY APPARATUS**

(57) A composition for melt casting film formation that excels in not only uniformity of retardation being an optical characteristic, especially uniformity of retardation in the direction of film width, but also contrast; and relevant thereto, an optical film, process for producing the optical film, polarization plate and liquid crystal display apparatus. Accordingly, there is provided a composition for melt casting film formation containing a cellulose ester in an amount of 50 mass% or more, **characterized in that** the free acid content of the composition is 50 ppm or less.



Printed by Jouve, 75001 PARIS (FR)

## Description

### TECHNICAL FIELD

The present invention relates to a composition for film formation by melt-casting, an optical film, a method of preparing an optical film, a polarizing plate and a liquid crystal display, and more in detail to a composition for melt-casting to form film that excels in not only uniformity of retardation as an optical characteristic, especially uniformity of retardation in the direction of film width, but also contrast; an optical film, a method for producing the optical film, a polarizing plate, and a liquid crystal display.

### TECHNICAL BACKGROUND

Liquid crystal displays (or LCD) are directly connectable to IC circuits at low voltage and low power consumption and are feasible for flat panels, which are broadly employed as a display panel for word processors, personal computers, monitors and portable information terminals. The basic constitution of such LCD is, for example, providing polarizing plates on both sides of a liquid crystal cell.

Such polarizing plates allow only a light of a wavefront polarized in one direction to pass. Therefore, an LCD plays an important role in visualizing any change of orientation of a liquid crystal, caused by an electric field. Thus, performance of the polarizing plate has a significant influence on that of the LCD.

A polarizer of a polarizing plate is one which allows iodine or the like to be adsorbed onto polymeric film, which is then stretched. Specifically, a solution, called an H-ink containing a dichroic substance (iodine) is allowed to adsorb onto a polyvinyl alcohol film and then, the film is uniaxially stretched, whereby the dichroic substance is oriented in a single direction. Protective films for a polarizing plate employ cellulose resins, specifically, cellulose triacetate.

Cellulose ester film, which is optically and physically useful as a protective film, is broadly employed. However, film making is conducted by a casting process using halogenated solvents, resulting in increased cost for solvent recovery. There have been tested various non-halogenated solvents but no satisfactory alternative with regard to solubility was obtained. In place of using an alternative solvent, novel solution methods such as a cooling process were attempted (for example, as described in Patent document 1), which were difficult for industrial realization, necessitating further study.

There was also disclosed a technique of incorporating a hindered phenol antioxidant, a hindered amine photostabilizer and an acid scavenger at prescribed ratios to improve spectral and mechanical characteristics (as described, for example, in Patent document 2). There were further disclosed a technique of using polyhydric alcohol ester plasticizers (as described in, for example, Patent document 3) and a technique of using polyhydric alcohol ester plasticizers restricted to a specific structure (as described in, for example, Patent document 4). There is known a stabilizer composition containing various stabilizers and phosphorus acid esters as a technique for preventing degradation of organic material (as described in, for example, Patent document 5).

In any way, production of optical cellulose ester film entails a manufacturing load and an equipment load along with requiring solvents in the manufacturing process, and is still insufficient in optical and mechanical characteristics.

There also was disclosed a technique for removal of impurities contained in a cellulose ester, in which a particulate cellulose ester is washed with water or a poor solvent (as described in, for example, Patent document 6); however, acetic acid as an impurity is still at a concentration of 200 ppm, which is due to insufficient removal, producing problems to be overcome such that film using such the cellulose ester is inferior in optical and mechanical characteristics.

Recently, there was attempted melt-casting cellulose esters as used in silver salt photography (as described in, for example, Patent document 7) or used as a protective film for a polarizer (as described in, for example, Patent document 8). However, cellulose esters are polymers exhibiting a remarkably high melt-viscosity as well as a high glass transition temperature, and when a cellulose ester was melted, extruded through a die and cast onto a cooling drum or a cooling belt, it was difficult to realize sufficient leveling and solidification is completed for a short time after being extruded, which produced problems that the obtained film was inferior in physical property characteristics, for example, haze and foreign matter luminescence spots, and retardation uniformity as an optical characteristic, specifically, retardation uniformity in the direction of film width were inferior to film made by solution casting.

Patent document 1: JP-A No. 10-95861 (hereinafter, JP-A refers to Japanese Patent Application Publication)
Patent document 2: JP-A No. 2003-192920
Patent document 3: JP-A No. 2003-12823
Patent document 4: JP-A No. 2003-96236
Patent document 5: JP-A No. 11-222493
Patent document 6: JP-A No. 8-134101
Patent document 7: JP-W No.6-501040 (hereinafter, JP-W refers to published Japanese translation of PCT international publication for patent application)

Patent document 8: JP-A No. 2000-352620

## DISCLOSURE OF THE INVENTION

## PROBLEM TO BE SOLVED

Accordingly, it is an object of the present invention to provide a composition for melt-casting film formation that excels in not only uniformity of retardation as an optical characteristic, especially uniformity of retardation in the direction of film width, but also excels in contrast; an optical film, a method for producing the optical film, a polarizing plate, and a liquid crystal display.

## MEANS FOR SOLVING THE PROBLEMS

The foregoing problems of the invention can be realized by the following constitution.

1. A composition to form a film by melt-casting, wherein the composition contains a cellulose ester in an amount of not less than 50% by mass and has a free acid content of not more than 50 ppm.
2. The composition described in 1, wherein the cellulose ester has a free acid content of 1 to 20 ppm.
3. A method of producing an optical film, wherein the method comprises melt-casting a composition as described in 1 or 2 to form a film.
4. An optical film, wherein the optical film is produced by the method of producing an optical film as described in 3.
5. A polarizing plate, wherein an optical film as described in 4 is adhered onto one side of the plate.
6. A liquid crystal display apparatus, wherein the liquid crystal display uses at least one of an optical film as described in 4 and a polarizing plate as described in 5.

## EFFECT OF THE INVENTION

The present invention can provide a composition for melt-casting film formation that excels not only in uniformity of retardation as an optical characteristic, especially uniformity of retardation in the direction of film width, but also in contrast; an optical film, a method for producing the optical film, a polarizing plate and a liquid crystal display.

## PREFERRED EMBODIMENTS OF THE INVENTION

There will be detailed preferred embodiments of the invention but the invention is by no means limited to these.

In view of the foregoing problems, the inventors of this application made extensive study and it was found that the foregoing problems were solved by an optical film produced by melt-casting a composition for film formation by melt-casting, in which the composition contained a cellulose ester in an amount of not less than 50% by mass and has a free acid content of not more than 50 ppm. The content of a cellulose ester of the composition is preferably not less than 70% by mass and more preferably from 80 to 95% by mass.

The free acid content of the composition is preferably not more than 40 ppm, more preferably not more than 30 ppm, while the lower limit thereof is preferably 0.1 ppm.

The free acid content of the cellulose ester is preferably from 1 to 20 ppm.

Solution casting as one of the methods for producing cellulose ester film is conducted in such a manner that a solution of a cellulose ester dissolved in solvent is cast and dried to evaporate the solvent to form the film, in which remaining solvent within the film must be removed, resulting in enormous increase of equipment investment and production cost for, for example, a drying line, drying energy and apparatuses for recovery regeneration of the evaporated solvent, reduction of which, is therefore an important problem.

On the contrary, film formation by a melt-casting does not use any solvent to prepare a cellulose ester solution, as used in the solution casting, having advantages of causing no load for drying and equipments.

However, in the process of producing a cellulose ester, acids such as an alkylcarboxylic acid or sulfuric acid remain in the cellulose ester so that film formation by melt-casting such the cellulose ester often causes coloring or lowering of the viscosity, producing problems such as deterioration in optical or mechanical characteristics, such as haze, transmittance and retardation.

As a result of study by the inventors, it was proved that film formation by melt-casting a solid cellulose ester, which was preliminary subjected to washing with a poor organic solvent for the cellulose ester and of which the composition for melt-casting film formation had a cellulose ester content of not less than 50% by mass and a free acid content of not more than 50 ppm, achieved less unevenness in retardation, specifically unevenness in the direction of film width and enhanced optical characteristics such as contrast.

With regard to washing of cellulose esters, there exist the following examples of the related art.

In JP-A No. 58-22510 is described esterification by using a lactide in a solvent of N,N-dimethylacetoamide, N-methyl-2-pyrrolodone, 1,3-dimethyl-2-imidazolidinone or their mixture, which is further mixed with lithium chloride; in published Japanese translation of PCT international publication for patent application No. 6-504010 is described sulfuric acid-catalyzed esterification with acetic acid or acetic anhydride, or an organic acid having 3 or more carbon atoms or its anhydride; and in JP-A No. 2003-252901 is described sulfuric acid-catalyzed acetylation of acetic acid or acetic anhydride, in each of which washing as applied in the invention is not conducted after the esterification reaction.

JP-B No. 53-15165 (hereinafter, JP-B refers to Japanese Patent Publication) proposes a method for removing acetone, in which fibrous cellulose acetate slurry obtained by precipitating an acetone solution of cellulose acetate is sheared to a surface area of 35 to 55 $m^2/g$ and the sheared slurry is continuously deposited on a porous support and filtered, and then washed with a non-solvent of cellulose acetate. JP-A No. 10-298201 proposes a method in which a cellulose ester solution containing an organic acid is extruded through a nozzle into a precipitant to form fibrous cellulose ester with applying shearing force, which is defiberized or fractured and washed, and then the fibrous cellulose ester is subjected to an alkali treatment. Any one of the foregoing is not washing of powdery cellulose ester but washing by using a solution, which is different from the constituent features of the invention.

It was further revealed that a cellulose ester film produced by a melt-casting method resulted in enhanced contrast, as compared to a cellulose ester produced by a solution casting method.

The melt-casting of the invention is defined as a cellulose ester being heated without using a solvent and melted to a temperature to form a melt exhibiting fluidity, followed by casting the fluid cellulose ester melt. A molding method by heat-melting is in more detail classified into a melt extrusion molding method, a press molding method, an inflation method, an injection molding method, a blow molding method and a stretch molding method. Of these, the melt extrusion method is superior to obtain an optical film which excels in mechanical strength and surface accuracy. There is also a method in which composition for molding film is heated to display its fluidity and extruded onto a drum or an endless belt to form a film, and such a method, as a melt-casing method, is also included in the methods of producing an optical film of the invention.

Washing Of Cellulose Ester With Poor Organic Solvent

A free acid content of not more than 50 ppm of the composition for melt-casting film formation can be achieved by washing a cellulose ester with poor organic solvents, as described below.

Thus, it can be realized to use, for the composition, a cellulose ester washed with a poor organic solvent for the cellulose ester. In other words, the free acid content of the composition can be controlled by controlling the free acid content of a cellulose ester which can be controlled via washing, and by controlling the amount of the cellulose ester used for the composition. It can also be controlled by washing the composition.

Poor organic solvents used for washing the cellulose ester relating to the invention can be chosen in accordance with solubility of the cellulose ester. Solvents used for washing with a single solvent preferably are nonpolar solvents such as hexane, heptane, octane, cyclohexane, benzene, toluene, dimethyl ether, diethyl ether, dipropyl ether and diisopropyl ether and protonic polar solvents such as methanol, ethanol, 1-propanol, 2-propanol and butanol, but are limited to these. More preferred solvents include hexane, heptane, diisopropyl ether, methanol and ethanol, and heptane and methanol are more preferred.

The use of two or more mixed solvents is preferably a combination of a solvent exhibiting high solubility for cellulose esters, such as a nonpolar solvent, e.g., methyl acetate, ethyl acetate, tetrahydrofuran, methylene chloride and chloroform or a non-protonic solvent, e.g., acetone, acetonitrile, N,N-dimethylformamide and dimethylsulfoxide with the foregoing poor organic solvent.

The use of a relatively high-boiling organic solvent requires considerable drying time after washing and is disadvantageous in terms of energy or production efficiency even when removed under reduced pressure. The use of a relatively low-boiling solvent, which lowers the washing temperature, resulting in not only lowered washing efficiency but also increased load for equipments such as a temperature controller, a cooling tube and the like, is unsuitable as an organic solvent used for washing a cellulose ester. Therefore, the boiling point of an organic solvent used in the invention is preferably not less than 30 °c and not more than 150 °C, and more preferably not less than 50 °c and not more than 100°C.

Suspension Washing Of Cellulose Ester

In washing the cellulose ester relating to the invention, the cellulose ester is preferably subjected to suspension washing in a poor organic solvent.

The suspension washing used in the invention represents that a solid cellulose ester is immersed in a poor organic solvent for the cellulose ester and washed therein. Washing methods are not specifically limited but it is preferred

that a solid cellulose ester is stirred in a suspension state under a temperature, a solvent specie and an amount which do not completely dissolve the cellulose ester and then, the cellulose ester is filtered off and dried. The solid cellulose ester represents powder or pellets and is preferably powder. A washing vessel and a stirrer are not specifically limited, but a stainless steel vessel and commercially available stirrer are preferably employed.

Solvents used for the suspension washing employed in the invention are the same as those described in poor organic solvents for cellulose esters. The solvent is used preferably in an amount of from 1 to 30 parts by mass of cellulose ester, more preferably from 3 to 20 parts by mass, and still more preferably from 5 to 10 parts by mass.

The temperature of the solvent during stirring is preferably from 10 to 200°C, more preferably from 20 to 150 °C, and still more preferably from 30 to 100°C.

The stirring time is preferably from 0.1 to 24 hrs., more preferably from 0.5 to 12 hrs., and still more preferably from 1 to 5 hrs.

The temperature of a gas applied during drying is preferably from 10 to 200 °C, more preferably from 20 to 150 °C, and still more preferably from 30 to 100 °C. The drying may be conducted under reduced pressure or under ordinary pressure, and preferably under ordinary pressure (namely 1 atm.).

Cellulose ester causes gradual ester hydrolysis of a substituent portion under living conditions (not more than 50 °C, not more than 90% RH). Film formation of a composition using the cellulose ester, which was washed immediately after its production to remove free acids due to the production, realizes enhanced physical properties such as reduced retardation unevenness in the width direction, haze or luminescent foreign matter luminescence spots, however, as time advances after the washing, the free acid amount gradually increases and film formation in a similar manner resulted in lowering of physical properties of the film. In that case, if washing is conducted immediately before film production, the period of time from washing after cellulose ester production to film production is not specifically limited but when performing re-washing, the time period from washing after production to film formation is preferably not more than 3 years, more preferably not more than 1 year, and still more preferably not more than 6 months. Washing immediately after cellulose ester production and further washing before film formation is disadvantageous in cost and it is therefore preferable to perform washing immediately after cellulose ester production. In that case, the time limit for film formation is preferably not more than one year, more preferably not more than 6 months, and still more preferably not more than 3 months.

Free Acid

In the invention, the composition for melt-casting film formation is preferably a mixture of a cellulose ester and additives such as a plasticizer, an antioxidant, a stabilizer, a UV absorber, a matting agent and the like, and the mixture is used preferably in the form of solidified pellets and the amount of free acids of the composition is determined by determining the free acid content of the pellets.

There are formed pellets as one form of the cellulose ester composition of the invention, which contains preferably at least 50% by mass of a cellulose ester and are optionally mixed with a plasticizer, a phenol compound, a hindered amine compound, a phosphorus compound, sulfur compound, a heat-resistant processing stabilizer, an antioxidant such as oxygen scavenger, an acid scavenger, a viscosity lowering agent, a retardation controlling agent, a UV absorber, a matting agent or other additives. Examples of a method of producing pellets of the invention include a method in which the individual components are mixed by a mixer and meltingly kneaded by an extruding machine at a cylinder temperature and a die temperature of 150 to 300 °C to obtain a granulated material and a simple method in which the individual components are directly meltingly mixed in a molding machine to obtain pellets. There is also a method in which resin components are kneaded by using a twin-screw extruder and then a filler is added thereto to form pellets. In cases when using a two-shaft kneader, after kneading, a bar-like melt of 0.5 - 5 mm diameter is extruded and cut to an optimal length, for example, 1 - 5 mm by a strand cutter, which is used as pelletized mold material.

The free acids include a carboxylic acid derivative of raw material which was not removed in the process of production and sulfuric acid used as a catalyst for esterification. There is also included carboxylic acid derivatives detached from a cellulose ester in the course of from production to use.

These free acids can be quantitatively measured in the following manner.

Pre-treatment:

A 500 mg sample (M) is weighed out and placed into a PP-made vessel, and 10 ml of ultrapure water is added thereto.

This mixture is dispersed in an ultrasonic cleaner for 30 min. and filtered with a water-based chromatodisc (0.45 μm), which is used as a sample.

Determination Of Acetic Acid And Propionic Acid

Apparatus: Ion chromatograph DX-500, DIONEX Co.
Column: DOINEX Ion Pac ICE-AS1
Suppressor: AMMS-II (4 mm)
Eluate: 1.0 mM octanesulfonic acid
Regenerating liquid: 5.0 mM tetrabutylammonium hydroxide (fed by highly pure nitrogen at 35 kPa)
Flow rate: 1.0 ml/min
Injection amount: 25 μl

Determination of $SO_4$ :

Apparatus: Ion chromatograph DX-120, DIONEX Co.
Column: Ion Pac AG14 (4 mm) + Ion Pac AS14 (4 mm)
Suppressor: ASRS-ULTRA II (4 mm)
Eluate: 3.5 mM $Na_2CO_3$ 1.0 mM $NaHCO_3$
SRS current: 50 mA
Flow rate: 1.0 ml/min
Injection amount: 25 μl
Conversion method:
Content (ppm) = measured value (mg/l)/1000 x 10/M(mg)x1000000

The total amount of free acids remaining after suspension washing of the cellulose ester, such as carboxylic acid derivatives and sulfuric acid used as a catalyst is preferably not more than 50 ppm, and more preferably in the range of 1 to 20 ppm.

Cellulose Ester

A cellulose ester relating to the invention, which includes at least one structure of an aliphatic acyl group and a substituted or unsubstituted aromatic acyl group, is a single- or mixed-acid ester of a cellulose.

In cases when an aromatic ring of the aromatic acyl group is a benzene ring, examples of a substituent for the benzene ring include a halogen atom, cyano, alkyl group, aryl group, aryloxy group, carbonamido group, sulfonamido group, ureido group, aralkyl group, nitro, alkoxycarbonyl group, aryloxycarbonyl group, aralkyloxycarbonyl group, carbamoyl group, sulfamoyl group, acyloxy group, alkenyl group, alkynyl group, alkylsulfonyl group, arylsulfonyl group, alkyloxysulfonyl group, aryloxysulfonyl group, alkylsulfonyloxy group, and aryloxysulfonyl group, -S-R, -NH-CO-OR, -PH-R, $-P(-R)_2$, -PH-O-R, -P(-R)(-O-R), $-P (-O-R)_2$, -PH (=O) -R-P (=O) $(-R)_2$, -PH(=O)-O-R, -P(=O) (-R) (-O-R), -P (=O) $(-O-R)_2$, -O-PH(=O)-R, -O-PH(=O)$(-R)_2$-O-PH(=O)-O-R, -O-P (=O) (-R) (-O-R), -O-P(=O) $(-O-R)_2$, -NH-PH(=O) -R, -NH-P(=O)(-R)(-O-R), -NH-P(=O)$(-O-R)_2$, $-SiH_2$-R, -SiH $(-R)_2$, -Si $(-R)_3$, -O-$SiH_2$-R, -O-SiH$(-R)_2$ and -O-Si $(-R)_3$.

In the foregoing, "R" is an aliphatic group, an aromatic group or a heterocyclic group. The number of substituents is preferably from 1 to 5, more preferably from 1 to 4, still more preferably from 1 to 3, and further still more preferably 1 or 2. Of these substituents, a halogen atom, cyano, alkyl group, alkoxy group, aryl group, aryloxy group, acyl group, carbonamido group, sulfonamido group and ureido are preferred; a halogen atom, cyano, alkyl group, alkoxy group, aryloxy group, acyl group and carbonamido group are more preferred; a halogen atom, cyano, alkyl group, and aryloxy group are still more preferred; and a halogen atom, alkyl group and alkoxy group are most preferred.

The foregoing halogen atom includes a fluorine atom, chlorine atom, bromine atom and iodine atom. The alkyl group may be a cyclic structure or branched. The number of carbon atoms of the alkyl group is preferably from 1 to 20, more preferably from 1 to 12, still more preferably from 1 to 6, and most preferably from 1 to 4. Specific examples of the alkyl group include methyl, ethyl, propyl, isopropyl, butyl, t-butyl, hexyl, cyclohexyl, octyl and 2-ethylhexyl. The alkoxyl group may be a cyclic structure or branched. The number of carbon atoms of the alkoxyl group is preferably from 1 to 20, more preferably from 1 to 12, still more preferably from 1 to 6, and most preferably from 1 to 4. Specific examples of the alkoxy group include methoxy, ethoxy, 2-methoxyethoxy, 2-methoxy-2-ethoxyethoxy, butyloxy, hexyloxy and octyloxy.

The number of carbon atoms of the aryl group is preferably from 6 to 20, and more preferably from 6 to 12. Specific examples of the aryl group include phenyl and naphthyl. The number of carbon atoms of the aryloxy group is

preferably from 6 to 20, and more preferably from 6 to 12. Specific examples of the aryloxy group include phenoxy and naphthoxy. The number of carbon atoms of the acyl group is preferably from 1 to 20, and more preferably from 1 to 12. Specific examples of the acyl group include formyl, acetyl and benzoyl. The number of carbon atoms of the carbonamido group is preferably from 1 to 20, and more preferably from 1, to 12. Specific examples of the carbonamido group include acetoamido and benzamido. The number of carbon atoms of the sulfonamido group is preferably from 1 to 20, and more preferably from 1 to 12. Specific examples of the sulfonamido group methanesulfonamido, benzenesulfonamido and p-toluenesulfonamido. The number of carbon atoms of the ureido group is preferably from 1 to 20, and more preferably from 1 to 12. Specific examples of the ureido group include (unsubstituted) ureido.

The number of carbon atoms of the aralkyl group is preferably from 7 to 20, and more preferably from 7 to 12. Specific examples of the aralkyl group include benzyl, phenethyl and naphthylmethyl. The number of carbon atoms of the alkoxycarbonyl group is preferably from 1 to 20, and more preferably from 2 to 12. Specific examples of the alkoxycarbonyl group include methoxycarbonyl. The number of carbon atoms of the aryloxycarbonyl group is preferably from 7 to 20, and more preferably from 7 to 12. Specific examples of the aryloxycarbonyl group include phenoxycarbonyl. The number of carbon atoms of the aralkyloxycarbonyl group is preferably from 81 to 20, and more preferably from 8 to 12. Specific examples of the aralkyloxycarbonyl group include benzyloxycarbonyl. The number of carbon atoms of the carbamoyl group is preferably from 1 to 20, and more preferably from 1 to 12. Specific examples of the carbamoyl group include (unsubstituted) carbamoyl and N-methycarbamoyl. The number of carbon atoms of the sulfamoyl group is preferably not more than 20, and more preferably not more than 12. Specific examples of the sulfamoyl group include (unsubstituted) sulfamoyl, and N-methylsulfamoyl. The number of carbon atoms of the acyloxy group is preferably from 1 to 20, and more preferably fro 2 to 12. Specific examples of the acyloxy group include acetoxy and benzoyloxy.

The number of carbon atoms of the alkenyl group is preferably from 2 to 20, and more preferably from 2 to 12. Specific examples of the alkenyl group include vinyl, allyl and isopropenyl. The number of carbon atoms of the alkynyl group is preferably from 2 to 20, and more preferably from 2 to 12. Specific examples of the alkynyl group thienyl. The number of carbon atoms of the alkylsulfonyl group is preferably from 1 to 20, and more preferably from 1 to 12. The number of carbon atoms of the alkyloxysulfonyl group is preferably from 1 to 20, and more preferably from 1 to 12. The number of carbon atoms of the aryloxysulfonyl group is preferably from 6 to 20, and more preferably from 6 to 12. The number of carbon atoms of the alkylsulfonyloxy group is preferably from 1 to 20, and more preferably from 1 to 12. The number of carbon atoms of the aryloxysulfonyl group is preferably from 6 to 20, and more preferably from 6 to 12.

In cases when the cellulose ester relating to the invention is an aliphatic acid ester of an aliphatic acyl group substituted for the hydroxylic hydrogen atom of a cellulose, the aliphatic acyl group has 2 - 20 carbon atoms and specific examples thereof include acetyl, propionyl, butyryl, isobutyryl, valeryl, pivaloyl hexanoyl, octanoyl, lauroyl and stearoyl.

The foregoing aliphatic acyl group includes substituted one and examples of a substituent include ones exemplified as a substituent for a benzene ring when the aromatic ring is a benzene ring.

In cases when an esterified substituent of the foregoing cellulose ester is an aromatic ring, the number of substituents substituted for the aromatic ring is 0 or 1 - 5, preferably 1 - 3, and more preferably 1 or 2. When the number of substituents substituted for the aromatic ring is 2 or more, such substituents may be the same or different, and may form a condensed polycyclic compound (e.g., naphthalene, indene, indane, phenathrene, quinoline, isoquinoline, chromene, phthalazine, acridine, indole, indoline).

The cellulose ester relating to the invention has at least one structure selected from a substituted or unsubstituted aliphatic acyl group and a substituted or unsubstituted aromatic acyl group, which may be a single- or mixed-acid ester of a cellulose, or may be a mixture of at least two cellulose esters.

The cellulose ester relating to the invention is preferably at least one selected from cellulose acetate, cellulose propionate, cellulose butyrate, cellulose acetate propionate, cellulose acetate butyrate, cellulose acetate phthalate and cellulose phthalate.

With regard to the degree of substitution of a mixed acid ester, a lower fatty acid ester or more preferable cellulose acetate propionate or cellulose acetate butyrate contains an acyl group of 2 - 4 carbon atoms as a substituent and there is preferred a cellulose resin containing a cellulose ester simultaneously satisfying the following equations (I) and (II) in which X represents the degree of substitution of an acetyl group and Y represents the degree of a propionyl group or butyryl group. The degree of substitution of the acetyl group and that of the other group are each determined in accordance with ASTM-D817-96.

$$\text{Equation (I)} \quad 2.5 \leq X + Y \leq 2.9$$

$$\text{Equation (II)} \quad 0.1 \leq X \leq 2.0$$

Of these, cellulose acetate propionate is preferred and it is specifically preferred that $1.0 \leq X \leq 2.5$ and $0.5 \leq Y \leq 2.5$. There may be blended cellulose esters differing in their degree of substitution so that the overall optical film falls within the foregoing range. The portion which is not substituted by the acyl group usually exists as a hydroxyl group. These can be synthesized by commonly known methods. The degree of substitution of an acetyl group can be determined in accordance with ASTM-D817-96.

The number average molecular weight of a cellulose ester used for the optical film of the invention falls preferably within the range of 50000 to 300000, resulting in enhanced mechanical strength of the film, and the range of 60000 to 200000 is more preferred.

A cellulose ester used in the invention preferably exhibits a ratio of weight average molecular weight Mw/ number average molecular weight Mn of from 1.5 to 5.5, more preferably from 2.0 to 4.5, still more preferably from 2.3 to 4.0, and further still more preferably 2.5 to 3.5.

Determination of weight average molecular weight can be conducted in the following manner.

Determination Of Molecular Weight

The molecular weight is determined by using a high-speed liquid chromatography (gel permeation chromatography GPC) .

Measurement conditions are as follows:
Apparatus: HLC-8220 GPC (produced by TOSO)
Column: TSK-SUPER HM-M (ϕ 6.0 mm x 150 mm)
TSK-Guardcolumn H-H (ϕ 4.6 mm x 35 mm)
Solvent: tetrahydrofuran
Flow rate: 0.6 ml/min
Temperature: 40 °C
Sample concentration: 0.1% by mass
Calibration curve: standard polystyrene STK

There was used a calibration curve prepared by 13 samples of standard polystyrene (produced by TOSO), having Mw = 1000000 - 500. The 13 samples were used approximately at equivalent intervals.

Cellulose as raw material for a cellulose ester used in the invention may be various kinds of wood pulp or cotton linter and wood pulp may be either from needle trees or leaf trees, but needle trees are preferred. Cotton linter is preferably used in term of peelability at the time film formation. Cellulose esters made from these may be optimally mixed or singly used.

There is usable a ratio of cellulose ester originating in cotton linter: cellulose ester origination wood pulp (needle tree): cellulose ester originating in wood pulp (leaf tree of, for example, 100:0:0, 90:10:0, 85:15:0, 50:50:0, 20:80:0, 10: 90:0, 0:100:0, 0:0:100, 80:10:10, 85:0:15 or 40:30:30.

The limiting viscosity of a cellulose ester is preferably in the range of from 1.5 to 1.75, and more preferably from 1.53 to 1.63.

A cellulose ester used in the invention preferably is a film which exhibits less foreign matter luminescence. The foreign matter luminescence is brightening spots of light coming out of a light source when a cellulose ester film is disposed between two perpendicularly disposed polarizing plates (cross Nicol), illuminated by a light source from one side and observed from the other side. Polarizing plates used for evaluation are desirably ones which are constituted of a protective film having no foreign matter luminescence and ones using a glass plate for protection of the polarizing plates. One of the causes for the foreign matter luminescence is assumed to be due to non-esterified or low-esterified cellulose, so that foreign matter luminescence can be removed by using a cellulose ester of reduced foreign matter luminescence (or using a cellulose ester exhibiting a low dispersion in degree of substitution) and by filtering a melted cellulose ester or passing it through a filtration step in at least either the latter stage of cellulose ester synthesis or in the stage of obtaining precipitates. Since a melted resin exhibits a high viscosity, the latter method is efficient.

There are tendencies that thinner film results in fewer number of foreign matter luminescence spots per unit area and a lower cellulose ester content of the film forms less foreign matter luminescence. The number of foreign matter luminescence spots having a spot diameter of 0.01 mm or more is preferably not more than 200 spots/$cm^2$, more preferably not more than 100 spots/$cm^2$, still more preferably not more than 50 spots/$cm^2$, and further still more preferably not more than 30 spots/$cm^2$, and yet further still more preferably not more than 10 spots/$cm^2$. The number of foreign matter luminescence spots having a spot diameter of 0.005 to 0.01 mm is also preferably not more than 200 spots/$cm^2$, more preferably not more than 100 spots/$cm^2$, still more preferably not more than 50 spots/$cm^2$, and further still more preferably not more than 30 spots/$cm^2$, and yet further still more preferably not more than 10 spots/$cm^2$, while none is most preferred.

When removing foreign matter luminescence through melt filtration, filtering a cellulose composition mixed with additives such as a plasticizer, an antidegradation agent, an antioxidant and the like is preferred in terms of enhanced efficiency for removing foreign matter luminescence rather than filtering a melt of a cellulose ester alone. Reduction can also be achieved through solution in a solvent and filtration in the process of synthesis. A melt of a cellulose ester is filtered preferably at a viscosity of not more than 10000 P, more preferably not more than 5000 P, still more preferably not more than 1000 P and further still more preferably not more than 500 P. There are preferably used, as a filtering material, commonly known materials such as glass fibers, cellulose fibers, filtration paper and a fluororesin, e.g., tetrafluoroethylene resin. Specifically, ceramics and metals are preferably used. The absolute filtration precision of a filter is preferably not more than 50 μm, more preferably not more than 30 μm, still more preferably not more than 10 μm, and further still more preferably not more than 5 μm. These are optimally combined. A filter material may be the surface type or the depth type one but the depth type is preferred in terms of being reduced tendency to clog.

Enclosure Of Additive

A cellulose ester relating to the invention preferably encloses at least one additive before being heat-melted.
In the invention, the expression "encloses at least one additive" means that the additive is not only encapsulated within the cellulose ester but also exists simultaneously within the interior and on the surface thereof.
There is cited a method for enclosing an additive, in which a cellulose ester is dissolved in a solvent and then the additive is also dissolved or finely dispersed therein, followed by removal of the solvent. Commonly known techniques for removing a solvent are applicable and examples thereof include an in-liquid drying method, an air drying method, a solvent coprecipitation method, a freeze-drying method and a solution casting method. After removing the solvent, the composition of the cellulose ester and the additive can be prepared in the form of powder, granules, pellets, or film. Enclosure of an additive is performed by dissolving a cellulose ester solid, as described above but may be conducted concurrently with precipitating solidification in the synthesis process of a cellulose ester.
The in-liquid drying method, for example, is conducted as follows. An aqueous surfactant solution such as sodium laurylsulfate is added to a solution of a cellulose and an additive and emulsified. Subsequently, a solvent is evaporated under ordinary or reduced pressure to obtain a dispersion of the cellulose enclosing the additive. Further, it is preferred to perform centrifugal separation or decantation to remove the surfactant. Emulsification can be performed by various methods, preferably using an emulsifying apparatus employing ultrasonic, high-speed rotary shearing or high pressure.
In the ultrasonic emulsification, either a batch type or a continuous type are feasible. The batch type is suitable for preparation of a relatively small amount of a sample, while the continuous type is suited for preparation of a large amount of a sample. The continuous type can use an apparatus, for example, UH-600SR (produced by SMT Co., Ltd.). In such a continuous type, the time for exposure to ultrasonic waves can be determined by (dispersion vessel volume/flow rate) x circulation number. The overall time for plural ultrasonic exposure apparatuses can be given as the total of the individual exposure times. The ultrasonic exposure time is not more than 10000 sec. in practice. A time of more than 10000 sec. results in increased operation load and it is practically necessary to shorten the emulsification time by selecting other emulsifying agents. Therefore, a duration of more than 10000 sec. is not needed. Further, a duration of not less than 10 sec. and not more than 2000 sec is preferred.
There are usable a disper-mixer, a homo-mixer, an ultra-mixer and the like as an emulsifying apparatus employing high-speed rotary shearing and these types are used according to liquid viscosity during emulsification.
High-pressure emulsification can use, for example, LAB 2000 (produced by SMT Co., Ltd.) and its emulsifying capability depends on the pressure applied to a sample. The pressure is preferably in the range of $10^4$ to $5x10^5$ kPa.
A cationic surfactant, an anionic surfactant, an amphoteric surfactant or a polymeric dispersing agent is usable as a surfactant, which can be chosen in accordance with the solvent or the targeted emulsion particle size.
In an air drying method, a solution of a cellulose ester and an additive is sprayed using a spray dry fryer, for example, GS 310 (produced by Yamato Kagaku Co.) to perform drying. In a solvent co-precipitation method, a solution of a cellulose ester and an additive is added to a poor solvent for the cellulose ester and the additive and caused to precipitate. The poor solvent can be arbitrarily mixed with a solvent to dissolve the cellulose and the additive. The poor solvent may be a mixed solvent. The poor solvent may be added to the solution of a cellulose ester and an additive.
The precipitated composition of a cellulose ester and an additive can be filtered, dried and separated.
In the cellulose ester and an additive composition, the particle size of the additive in the composition is not more than 1 m, preferably not more than 50 nm, and more preferably not more than 200 nm. A less particle size of the additive, which results in more homogeneous distribution of a mechanical characteristic and an optical characteristic of the melt molding material, is preferred.
The cellulose ester and additive composition and additives added at the time of heat-melting are dried desirably before or during heat-melting. The expression "are dried" refers to removal of any one of moisture absorbed by any of melt materials, water or a solvent used in the preparation of the composition and any solvent contaminant during synthesis

of the additives.

Commonly known drying methods are applicable for the foregoing removal, which can be conducted by methods such as a heating method, a reduced pressure method or a method of heating under reduced pressure and which may be performed in an atmosphere of air or nitrogen as an inert gas.

A method for removal can apply commonly known drying methods, such as a heating method, a reduced pressure method or a method of heating under reduced pressure, which may be conducted in an atmosphere of air or nitrogen as an inert gas. These drying methods are conducted preferably in a temperature range not causing degradation of materials in terms of film quality.

The content of residual water or solvent after removal in the foregoing drying stage is to be not more than 10% by mass of the total mass of the film composition, preferably not more than 5% by mass, more preferably not more than 1% by mass and still more preferably not more than 0.1% by mass. The drying temperature is not less than 100 °C and not more than Tg of the material. To avoid fusion of the material, the drying temperature is more preferably not less than 100 °C and not more than (Tg-5)°C and still more preferably not less than 110 C and not more than (Tg-20)°C. A temperature lower than this range often results in a lowered degree of drying or an excessively longer drying time. In cases when a material to be dried has a Tg, drying at a temperature higher than the Tg often results in fusion of the material, rendering the material difficult to handle.

The drying stage may be divided into two or more steps, for example, melt film formation may be performed through storage of materials in the preliminary drying step and a pre-drying step immediately before to one week before performing the melt film formation.

Additive

The optical film of the invention preferably contains at least one plasticizer selected from an ester plasticizer having a condensation structure of an organic acid and a tri- or more valent alcohol, an ester type plasticizer formed of a polyvalent alcohol and a monovalent alcohol and an ester type plasticizer formed of a polyvalent carboxylic acid and a monovalent alcohol; a phenol antioxidant and at least one stabilizer selected from a hindered amine photostabilizer, a phosphorus stabilizer and a sulfur stabilizer, and may contain an oxidant-decomposing agent, a radical scavenger, a metal deactivating agent, an ultraviolet absorber, a matting agent, a dye, a pigment, a plasticizer other than the foregoing plasticizers and an antioxidant other than the foregoing phenol antioxidant.

There are used additives to inhibit deterioration typified by coloring or molecular weight lowering, or formation of volatile components due to degradation of material, such as anti-oxidation of the film composition, scavenging decomposition generated acids, and retardation or inhibition of a decomposition reaction due to photolytically or thermally generated radical species, inclusive of unclarified decomposition reactions.

Thermally melting the film composition promotes a decomposition reaction and the decomposition reaction is often accompanied by coloration or deteriorated strength due to lowering of molecular weight. Further, the decomposition reaction of the film composition often results in generation of undesired volatile components.

When thermally melting the film composition, the foregoing additives are superior in inhibiting deterioration of strength, due to deterioration or degradation of material and maintaining strength inherent to the material, so that the presence of the additives are necessary to produce the optical filter of the invention.

Further, the presence of the additives also lowers formation of visible-colored substances, or reducing or annihilates adverse performance as an optical film, such as a lowered transmittance or increased haze value caused by contamination of volatile components in the film.

When the optical film of the invention is used in a liquid crystal display device, a haze value exceeding 1% adversely affects the display image, so that the haze value is preferably less than 1% and more preferably less than 0.5%.

The above-described additives being present at the time when heat-melting the film composition is preferred, which inhibit deterioration of strength of the film composition and maintain strength inherent to material at the step of providing retardation in the process of film production. When the film composition become brittle due to marked deterioration, fracturing tends to occur during the stretching stage, often rendering it difficult to control the retardation value.

A deterioration reaction due to aerial oxygen also occurs during storage of the film composition or in the film formation stage. In that case, it is preferred to employ effects of reducing the aerial oxygen concentration as well as stabilization action of the above-described additives is preferred to realize the invention. There are cited commonly known techniques of the use of an inert gas such as nitrogen or argon, a degassing operation under reduced pressure or in vacuo and an operation in a sealed environment and it is preferred to employ at least one of these three techniques in combination with the above-described additives. Reduction of the probability of the film composition being in contact with aerial oxygen inhibits deterioration of the material and is preferable to achieve the object of the invention.

To apply the optical film of the invention to a protective film for a polarizing plate, the presence of above-described additives in the film composition is preferred for enhancement of storage stability of the polarizing plate of the invention and the polarizer constituting the polarizing plate.

In a liquid crystal display using the polarizing plate of the invention, the presence of the above-described additives in the optical film of the invention restrains alteration or deterioration as described above and achieves enhanced storage stability of the optical film, and optical compensation design provided to the optical film are stabilized over a long period of time, resulting in enhanced display quality of the liquid crystal display.

Plasticizer

The optical film of the invention preferably contains an ester compound as a plasticizer, having a structure of condensation of an organic acid represented by formula (1) and a tri- or more-valent alcohol in an amount of 1 to 25% by mass as a plasticizer. Any effect of including the plasticizer is not noticed in an amount of less than 1% by mass. An amount of more than 25% by mass, which tends to cause bleed-out and results in reduced aging stability of the film, is not preferred. More preferably, the optical film contains the foregoing plasticizer in an amount of 3 to 20% by mass and still more preferably in an amount of 5 to 15% by mass.

Formula (1)

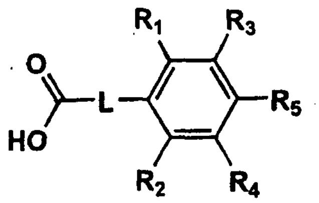

A plasticizer is in general an additive which is effective for improvement of brittleness or providing flexibility when added to a polymer. In the invention, addition of a plasticizer results in a lower melting temperature than that of the cellulose ester alone, and at the same temperature, the melt viscosity of the film composition containing a plasticizer is lower than that of the cellulose ester alone. Further, addition achieves enhanced hydrophilicity of cellulose ester so that water vapor permeability of cellulose ester films is lowered, therefore, the plasticizer functions as a agent for preventing moisture permeation.

The melting temperature of the film composition refers to the temperature at which the heated materials exhibit a state of fluidity. In order that a cellulose ester results in melt fluidity, it is necessary to heat the cellulose ester to a temperature which is at least higher than the glass transition temperature. At or above the glass transition temperature, the elastic modulus or viscosity decreases due to heat absorption, whereby fluidity comes into effect. However, at a higher temperature, cellulose ester melts and simultaneously undergoes thermal degradation to result in a decrease in the molecular weight of the cellulose ester, whereby the dynamic characteristics of the resulting film may be adversely affected. Consequently, it is preferable to melt cellulose ester at as low a temperature as possible. Lowering the melting temperature of the film forming materials is achieved by the addition of a plasticizer having a melting point or a glass transition temperature which is equal to or lower than the glass transition temperature of the cellulose ester.

The polyvalent alcohol ester plasticizer having a condensation structure of an organic acid represented by the foregoing formula (1) and a polyvalent alcohol lowers the melting temperature of a cellulose ester and exhibits reduced volatility in the melt film formation process or after production, which is superior in process suitability and results in an optical film superior in an optical characteristic, dimensional stability and flatness.

In the formula (1), $R_1$ - $R_5$ are each a hydrogen atom, a cycloalkyl group, an aralkyl group, an alkoxy group, a cycloalkyl group, an aryloxy group, an aralkyloxy group, an acyl group, a carbonyloxy group, an oxycarbonyl group, and an oxycarbonyloxy group, and these groups may be sub $R_1$ - $R_5$ is not a hydrogen atom. L represents a divalent linkage group, including a substituted or unsubstituted alkylene group, an oxygen atom, or a single bond.

The cycloalkyl group represented by $R_1$ - $R_5$ is preferably a cycloalkyl group having 3 - 8 carbon atoms and specific examples thereof include cyclopropyl, cyclopentyl, and cyclohexyl. These groups may be substituted and examples of a preferred substituent include a halogen atom, such as a chlorine atom, a bromine atom, a fluorine atom, a hydroxyl group, an alkyl group, an alkoxy group, a cycloalkoxy group, an aralkyl group (a phenyl group of which may be substituted by an alkyl group, a halogen atom or the like), an alkenyl group such as a vinyl group or an allyl group, a phenyl group (a phenyl group of which may be substituted by an alkyl group, a halogen atom or the like), a phenoxy group (a phenyl group of which may be substituted by an alkyl group, a halogen atom or the like), an acyl group having 2 - 8 carbon atoms such as an acetyl or propionyl group, and an unsubstituted carbonyloxy group having 2 - 8 carbon atoms, such as an acetyloxy or propionyloxy group.

The aralkyl group represented by $R_1$ - $R_5$ includes, for example, a benzyl group, a phenethyl group and a γ-phenylpropyl group, which may be substituted, and preferred substituents are the same as cited in the foregoing cycloalkyl group.

The alkoxy group represented by $R_1$ - $R_5$ includes an alkoxy group having 1 - 8 carbon atoms. Specific examples thereof include alkoxy groups such as methoxy, ethoxy, n-propoxy, n-butoxy, n-octyloxy, isopropoxy, isobutoxy, 2-ethylhexyloxy, and t-butoxy. These groups may be substituted and examples of a preferred substituent include a halogen atom such as a chlorine atom, bromine atom or a fluorine atom, a hydroxy group, an alkoxy group, a cycloalkoxy group, an aralkyl group (in which a phenyl group may be substituted by an alkyl group or a halogen atom), an alkenyl group, a phenyl group (which may be substituted by an alkyl group, a halogen atom or the like), an aryloxy group [for example, a phenoxy group (in which a phenyl group may be substituted by an alkyl group or a halogen atom)], an acyl group such as an acetyl group or a propionyl group, an unsubstituted acyloxy group having 2 - 8 carbon atoms, such as acetyloxy group or a propionyloxy group, and an arylcarbonyloxy group such as benzoyloxy group.

The cycloalkoxy group represented by $R_1$ - $R_5$ includes an unsubstituted cycloalkoxy group having 1 - 8 carbon atoms, and specific examples thereof include cyclopropyloxy, cyclopentyloxy and cyclohexyloxy. These groups may be substituted and preferred substituents are the same as cited in the foregoing cycloalkyl group.

The aryloxy group represented by $R_1$ - $R_5$ includes a phenoxy group, in which a phenyl group may be substituted by a substituent such as an alkyl group or a halogen atom, as cited in the foregoing cycloalkyl group.

The aralkyloxy group represented by $R_1$ - $R_5$ includes a benzyloxy group and a phenethyloxy group, which may be substituted by a substituent and preferred substituents are those as cited in the foregoing cycloalkyl group.

The acyl group represented by $R_1$ - $R_5$ includes an unsubstituted acyl group such as an acetyl group or propionyl group (in which a hydrocarbon group of the acyl group include an alkyl group, an alkenyl group and an alkynyl group), which may be substituted by a substituent and preferred substituents are those as cited in the foregoing cycloalkyl group.

The carbonyloxy group represented by $R_1$ - $R_5$ includes an unsubstituted an acyloxy group having 2 - 8 carbon atoms such as an acetyloxy group or propionyloxy group (in which a hydrocarbon group of the acyl group include an alkyl group, an alkenyl group and an alkynyl group) and an aryloxycarbonyl group such as benzoyloxy, which may be substituted by a substituent and preferred substituents are those as cited in the foregoing cycloalkyl group.

The oxycarbonyl group represented by $R_1$ - $R_5$ includes an alkoxycarbonyl group such a methoxycarbonyl group, an ethoxycarbonyl group or a propyloxycarbonyl group, and an aryloxycarbonyl group such as a phenoxycarbonyl group, which may be substituted by a substituent and preferred substituents are those as cited in the foregoing cycloalkyl group.

The oxycarbonyloxy group represented by $R_1$ - $R_5$ includes an alkoxycarbonyloxy group having 1 - 8 carbon atoms such as a methoxycarbonyloxy group, which may be substituted by a substituent and preferred substituents are those as cited in the foregoing cycloalkyl group.

At least one of these $R_1$ - $R_5$ is not a hydrogen atom. Any ones of $R_1$ - $R_5$ may combine with each other to form a ring.

The linkage group represented by L represents a substituted or unsubstituted alkylene group, an oxygen atom, or a single bond. The alkylene group includes a methylene group, an ethylene group and a propylene group, which may be substituted by the same substituents as cited in those for the group represented by $R_1$ - $R_5$.

The linkage group represented by L preferably is a bond, which leads to an aromatic carboxylic acid.

The organic acid forming an ester compound as a plasticizer and represented by the formula (1) is preferably one in which at least $R_1$ or $R_2$ is preferably the above-described alkoxy group, acyl group, oxycarbonyl group, carbonyloxy group or oxycarbonyloxy group. Further, a compound having plural substituents are also preferred.

In the invention the organic acid which is substituted for hydroxyl groups of a tri- or more-valent alcohol may be a single acid or plural acids.

A tri- or more-valent alcohol which reacts with the foregoing organic acid represented by formula (1) to form a polyvalent alcohol ester is preferably an aliphatic polyvalent alcohol having a valence of 3 to 20 and in the invention, the tri- or more-valent alcohol is preferably represented by the following formula (3):

formula (3) $R'-(OH)_m$

Wherein R' is an m-valent organic group, m is a positive integer of 3 or more and OH is an alcoholic hydroxyl group. A polyvalent alcohol having m of 3 or 4 is specifically preferred.

Preferred examples of a polyvalent alcohol, to which the present invention is not limited, include adonitol, arabitol, 1,2,4-butanetriol, 1,2,3-hexanetriol, 1,2,6-hexanetriol, glycerin, diglycerin, erythritol, pentaerythritol, dipentaerythritol, tripentaerythritol, galactitol, glucose, cellobiose, inositol, mannitol, 3-methylpentane-1,3,5-triol, pinacol, sorbitol, trimethylolpropane, trimethylolethane and xylitol. Of these, glycerin, trimethylethane, trimethylolpropane and pentaerythritol are preferred.

An ester formed of an organic acid represented by formula (1) and a polyvalent alcohol having a valence of 3 or more can be synthesized according to commonly known methods. Although representative synthesis examples are

shown in Examples, there are cited, for example, a method in which an organic acid represented by the formula (1) and a polyvalent alcohol are condensed in the presence of an acid to form an ester; a method in which an organic acid is preliminarily transformed to an acid chloride or an acid anhydride, which is reacted with a polyvalent alcohol; and a method in which a phenyl ester of an organic acid and a polyvalent alcohol are reacted. It is preferred to choose an appropriate method exhibiting high yield according to the targeted ester compound.

A plasticizer of an ester formed of an organic acid represented by the formula (1) and a polyvalent alcohol having a valence of 3 or more is preferably a compound represented by the following formula (2):

formula (2)

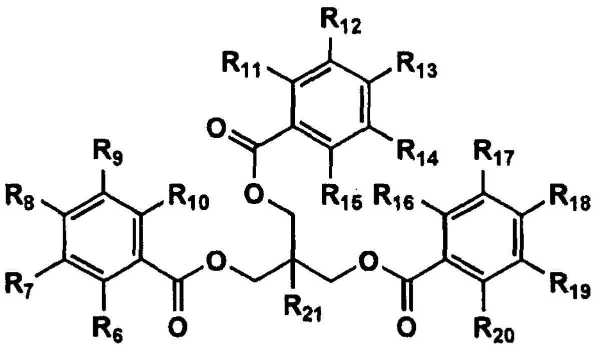

wherein $R_6$ through $R_{20}$ are each a hydrogen atom, a cycloalkyl group an alkoxy group, an aralkyl group, a cycloalkoxy group, an aryloxy group, an aralkyloxy group, an acyl group, a carbonyloxy group and oxycarbonyloxy group, and these groups may be substituted by a substituent, provided that at least one of $R_6$ to $R_{10}$ is not a hydrogen atom, at least one of $R_{11}$ to $R_{15}$ is not a hydrogen atom and at least one of $R_{16}$ to $R_{20}$ is not a hydrogen atom; and $R_{21}$ is an alkyl group.

The cycloalkyl group, aralkyl group, alkoxy group, cycloalkoxy group, aryloxy group, aralkyloxy group, acyl group, carbonyloxy group and oxycarbonyloxy group of $R_6$ to $R_{21}$ are the same as cited in the foregoing $R_1$ to $R_5$.

The molecular weight of the thus obtained polyvalent alcohol ester is not specifically limited but preferably from 300 to 1500, and more preferably from 400 to 1000. A larger molecular weight, which is difficult to vaporize, is preferred and a smaller molecule is preferred in terms of moisture permeability and compatibility with a cellulose ester.

Specific examples of a polyvalent alcohol ester relating to the invention are shown below.

1

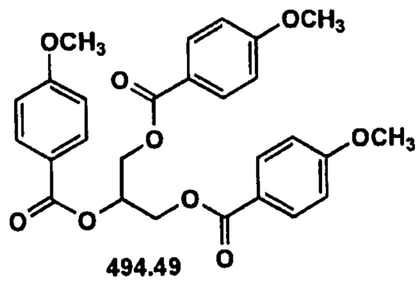

494.49

2

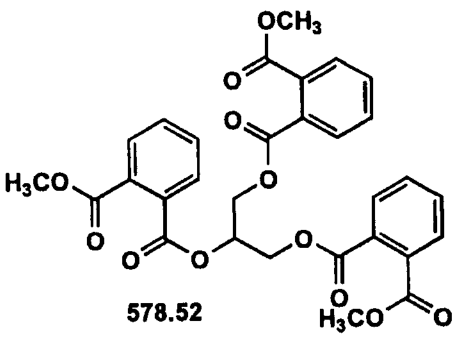

578.52

**3**

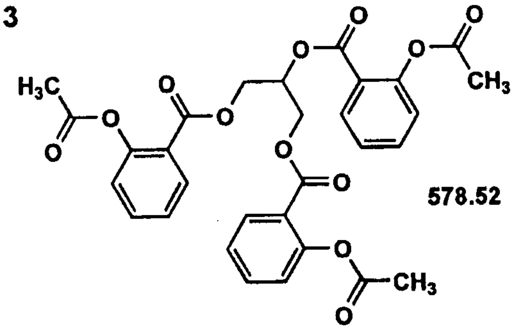

578.52

**4**

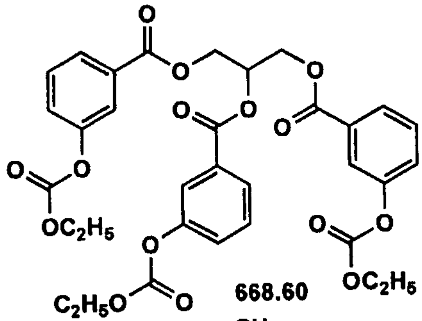

668.60

**5**

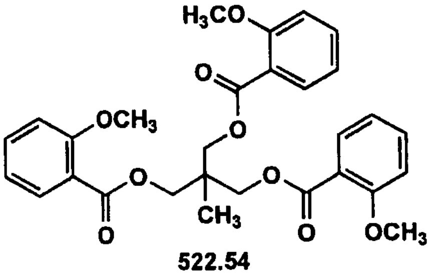

522.54

**6**

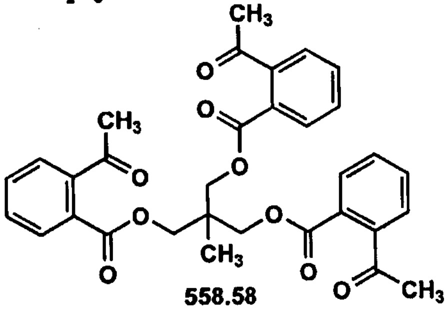

558.58

**7**

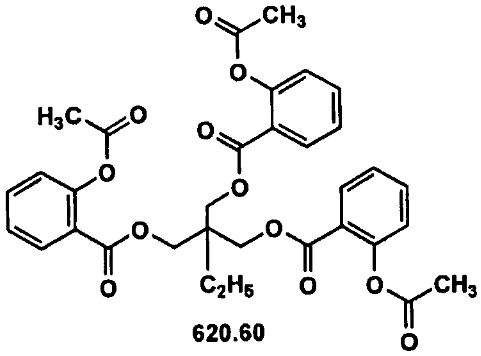

620.60

**8**

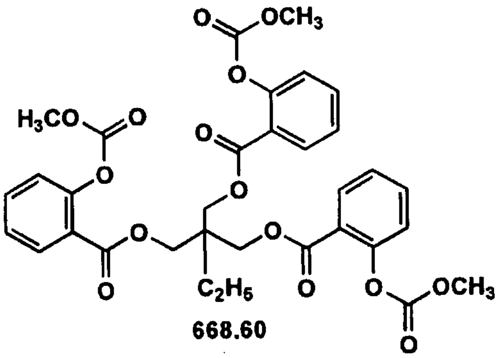

668.60

**9**

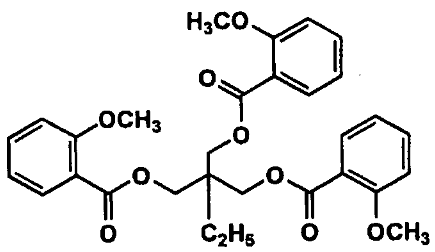

536.57

**10**

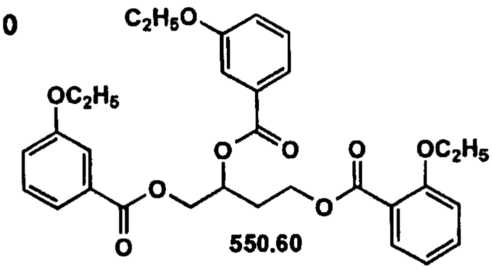

550.60

**11**

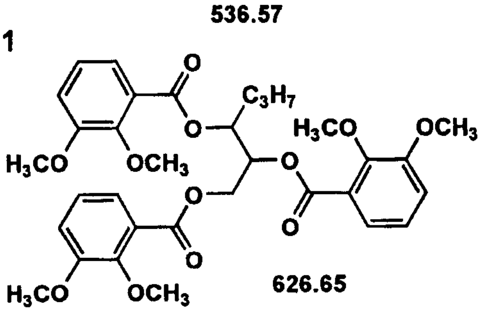

626.65

**12**

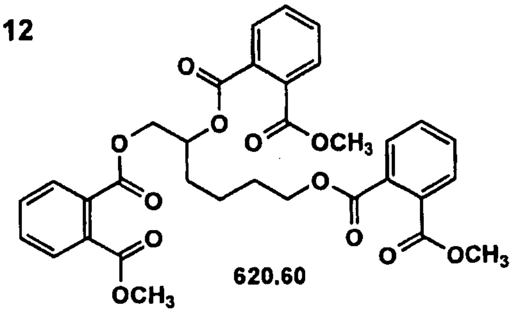

620.60

13

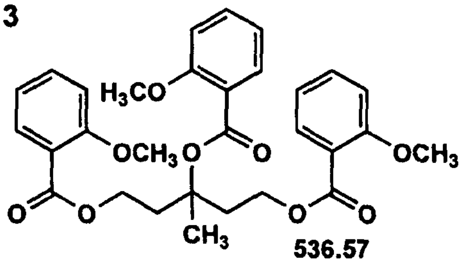

536.57

14

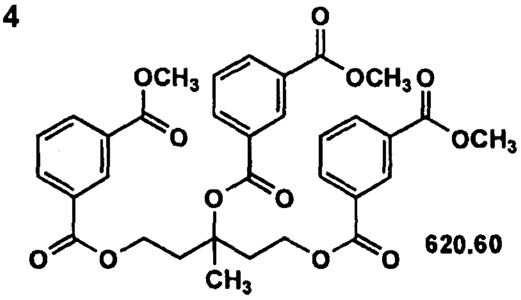

620.60

15

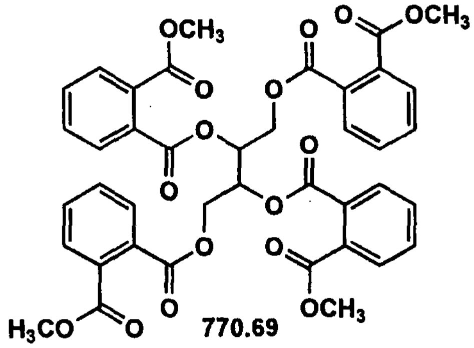

770.69

16

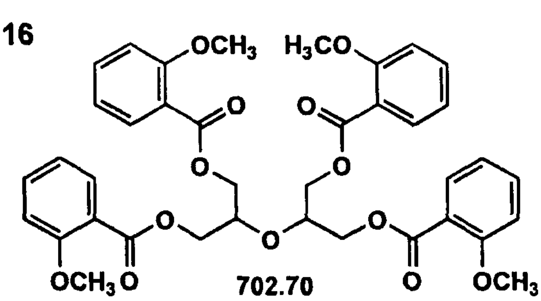

702.70

17

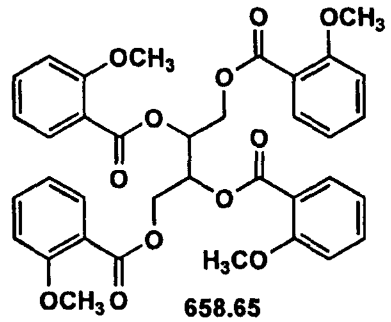

658.65

18

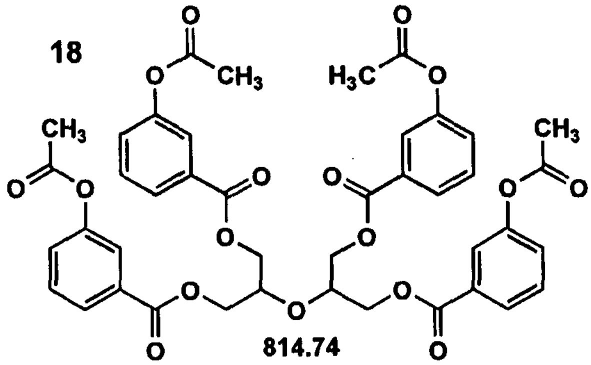

814.74

19

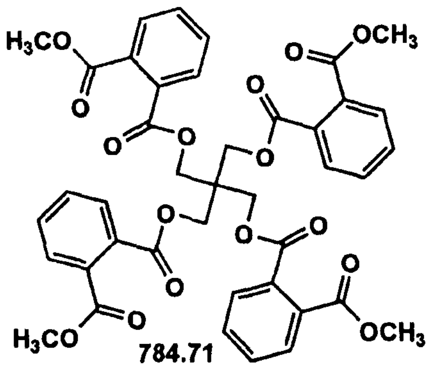

784.71

20

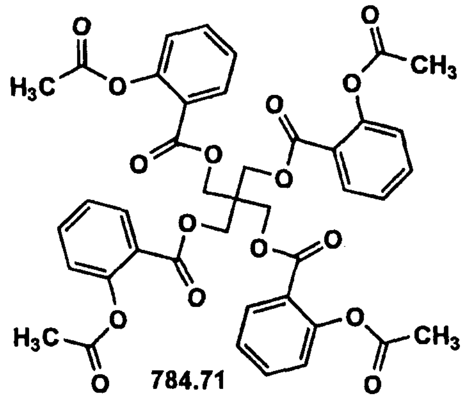

784.71

**21**

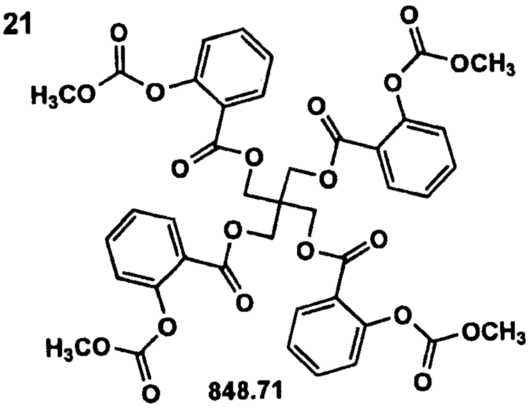

848.71

**22**

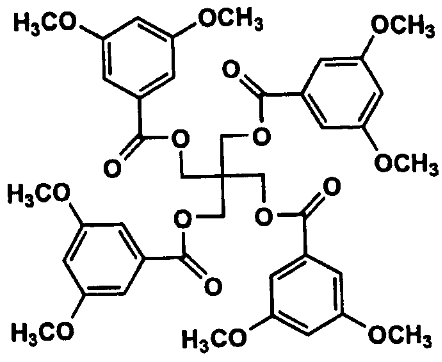

792.78

**23**

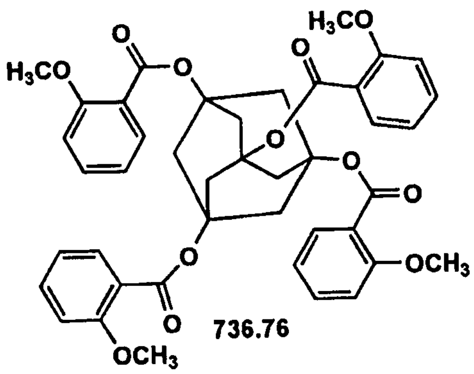

736.76

**24**

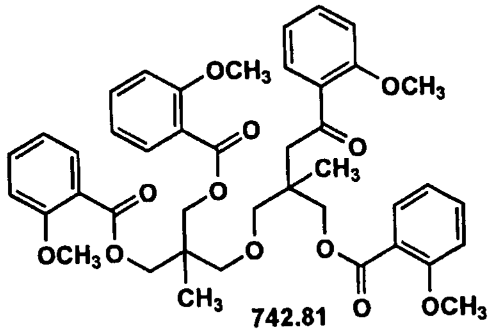

742.81

**25**

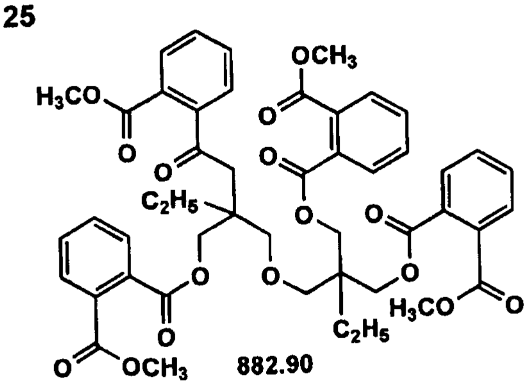

882.90

**26**

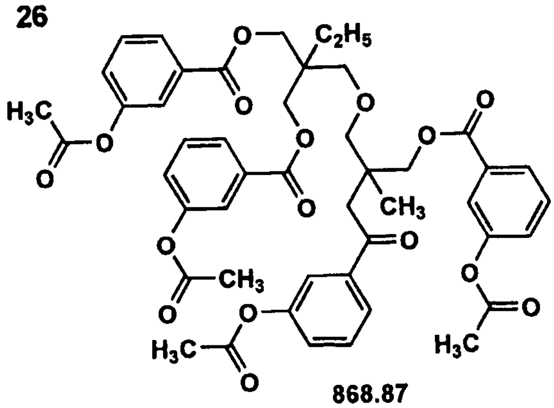

868.87

27

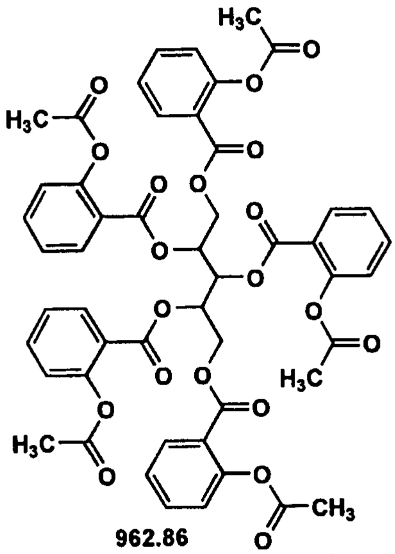

962.86

28

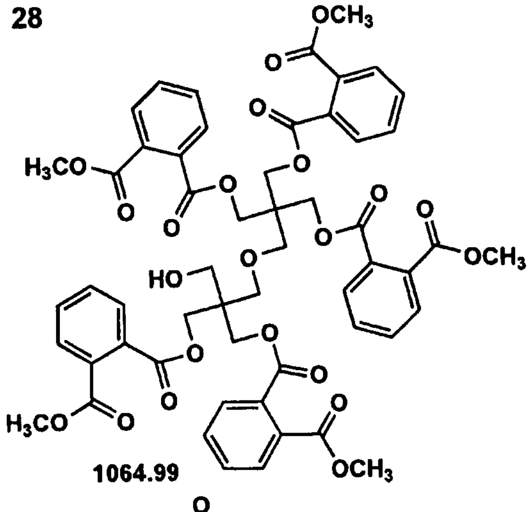

1064.99

29

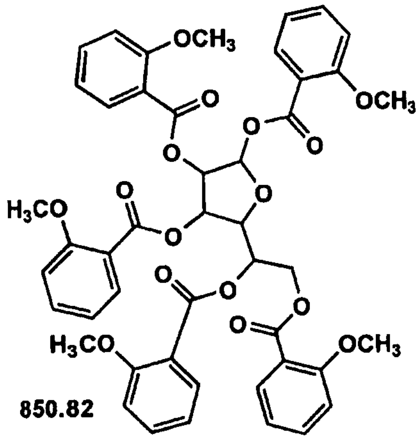

850.82

30

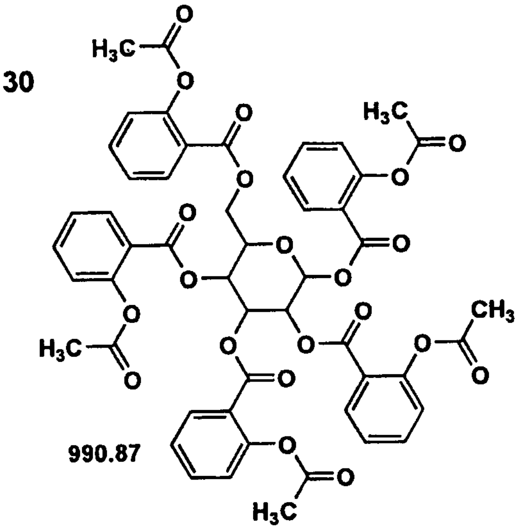

990.87

31

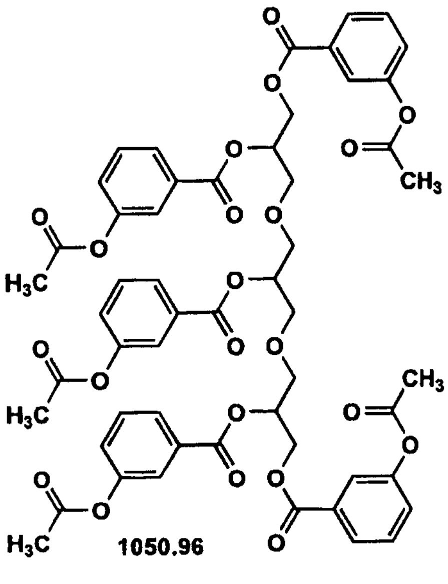

1050.96

32

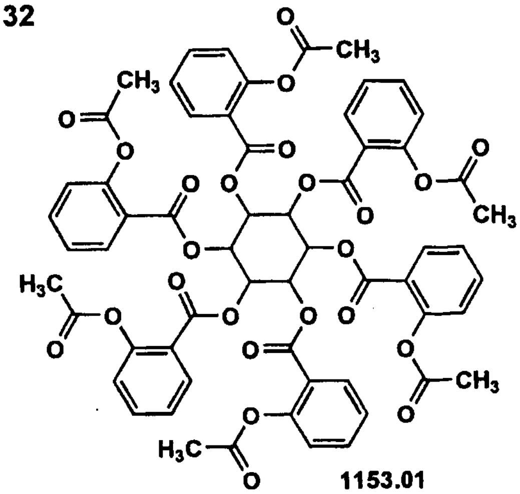

1153.01

**33**

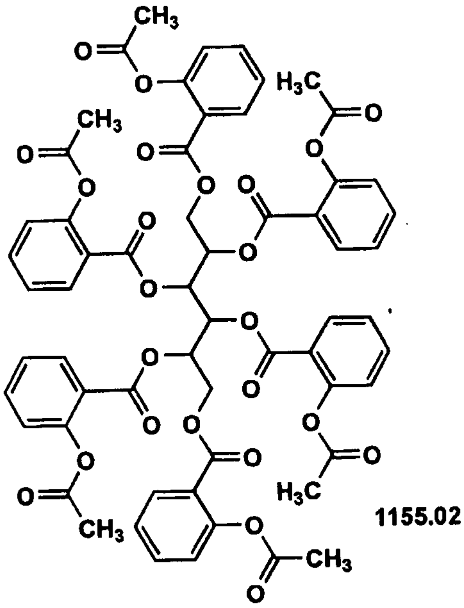

1155.02

**34**

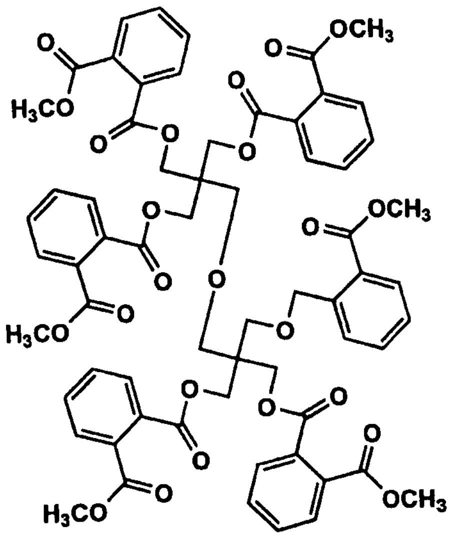

1213.15

**35**

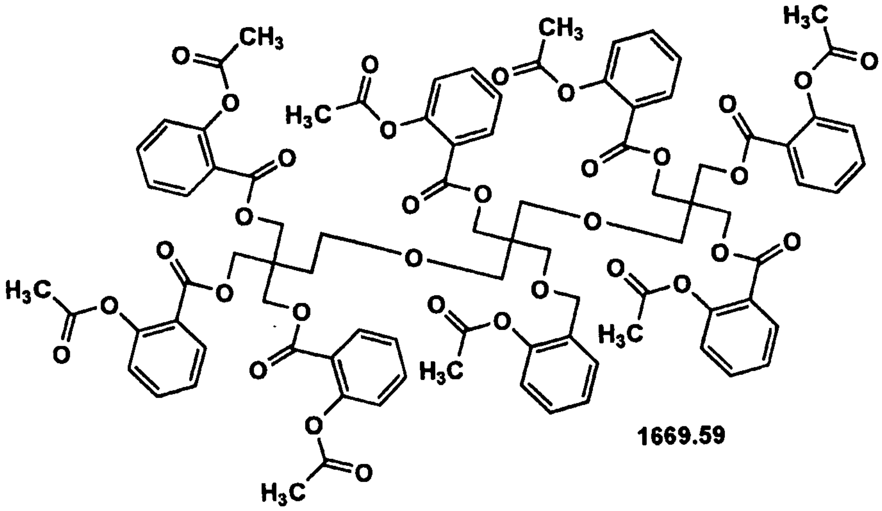

1669.59

**36**

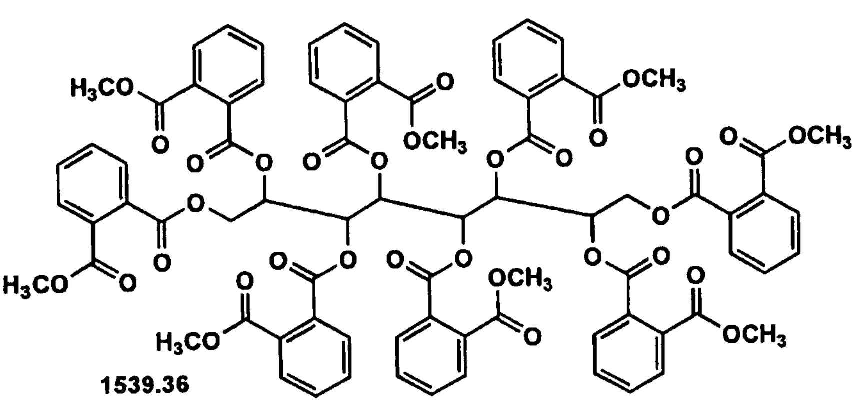

1539.36

**37**

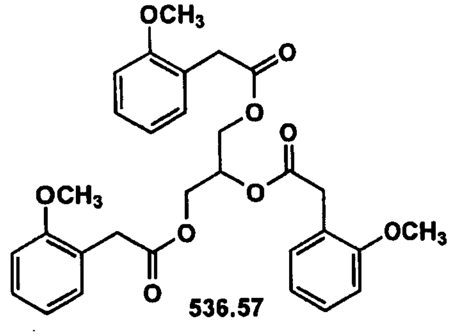

536.57

**38**

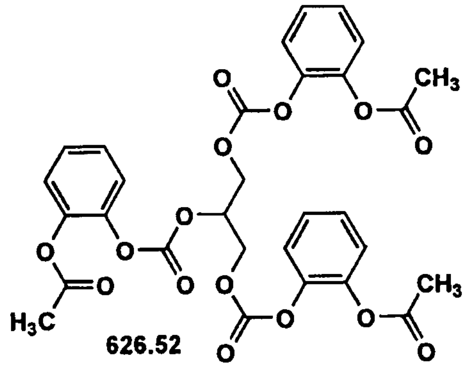

626.52

**39**

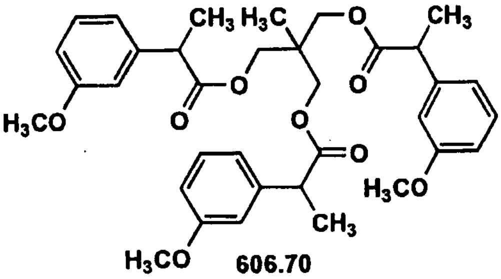

606.70

**40**

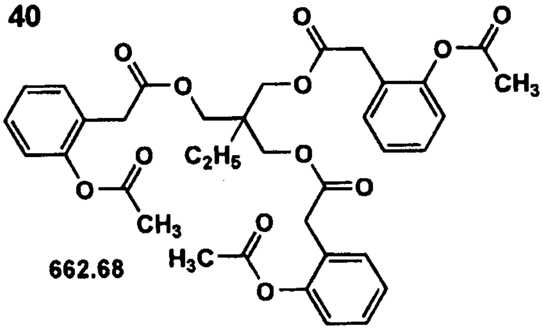

662.68

**41**

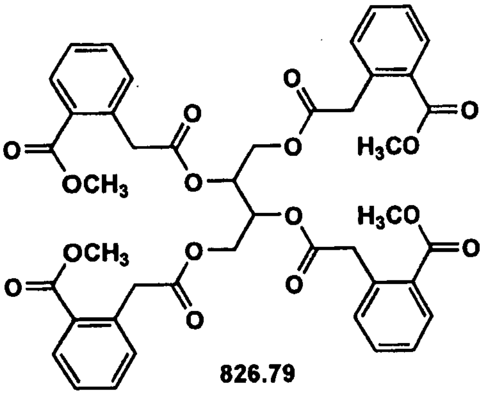

826.79

**42**

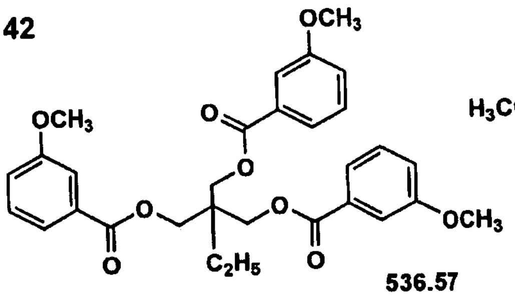

536.57

**43**

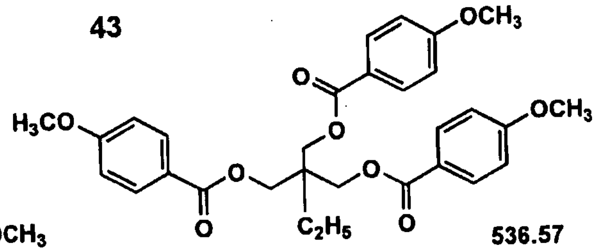

536.57

**44**

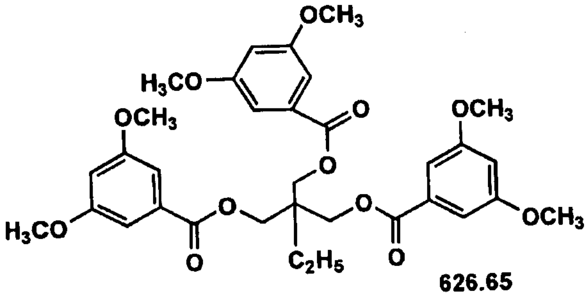

626.65

**45**

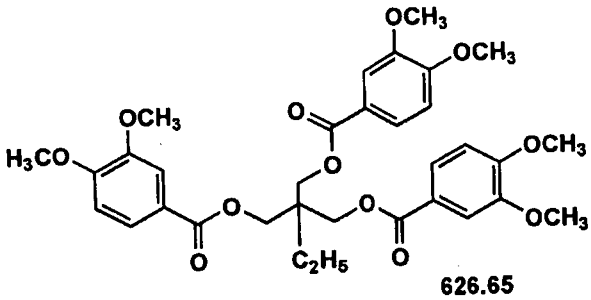

626.65

**46**

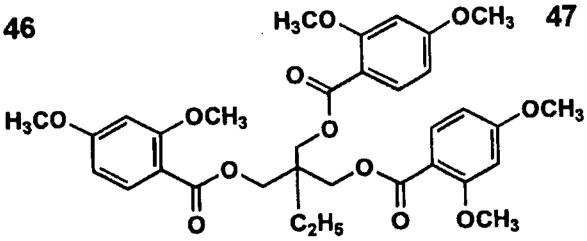

626.65

**47**

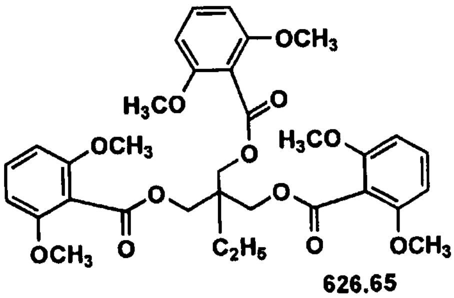

626.65

**48**

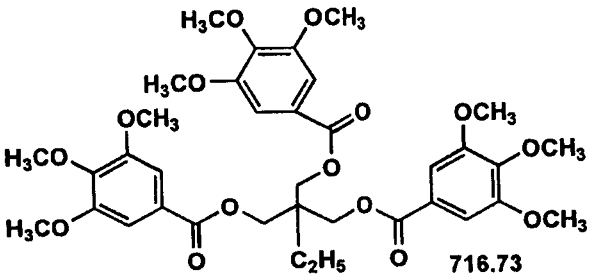

716.73

**49**

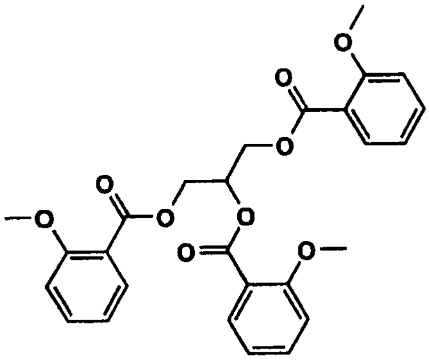

**494.49**

**50**

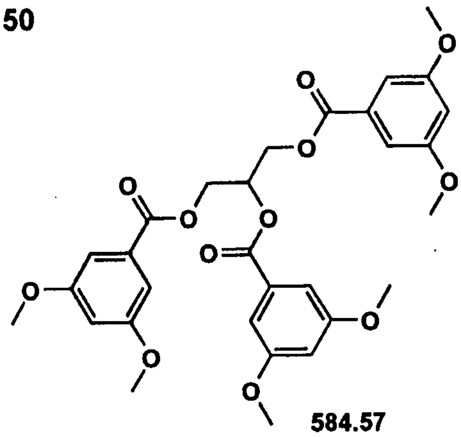

**584.57**

**51**

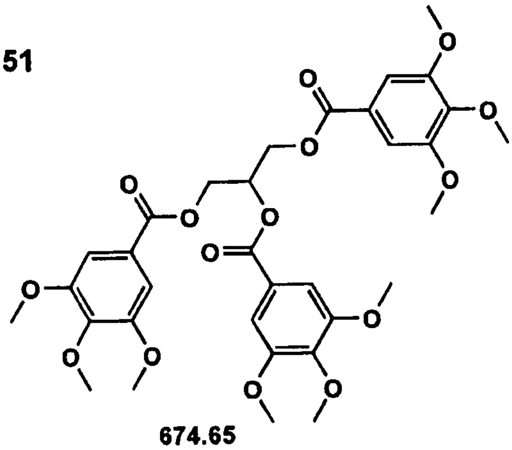

**674.65**

**52**

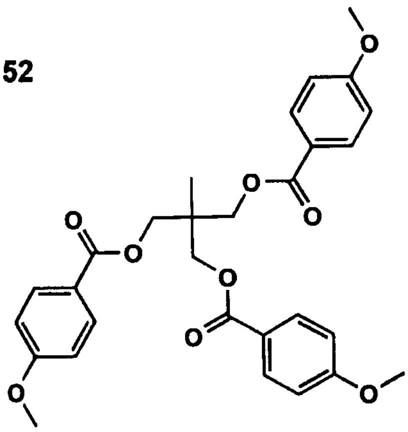

**522.54**

**53**

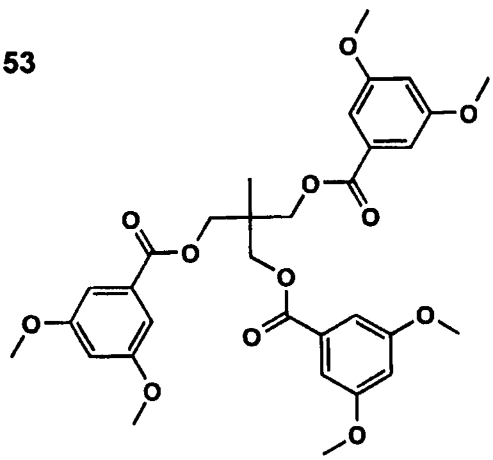

**612.62**

**54**

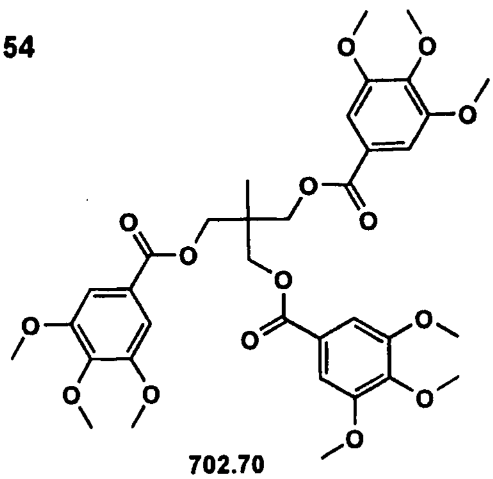

**702.70**

**55**

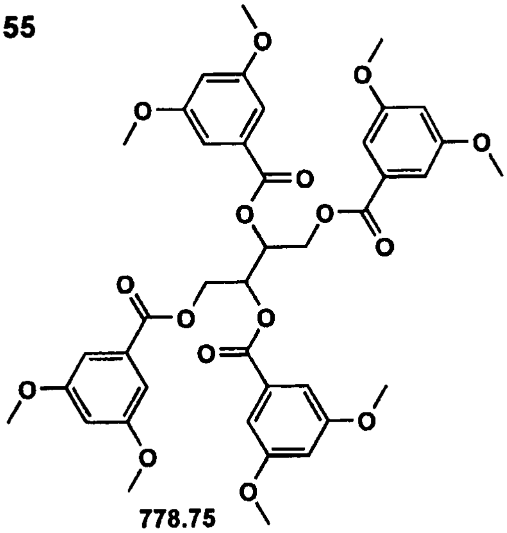

778.75

**56**

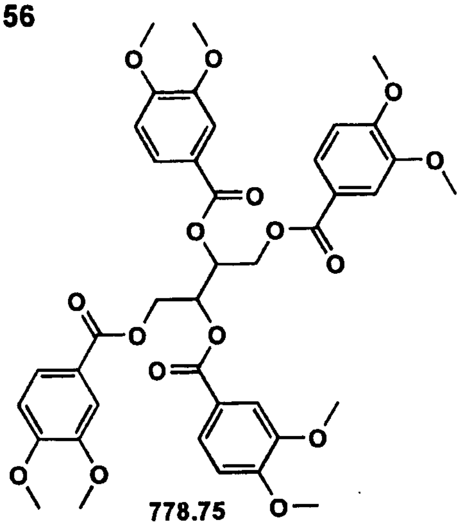

778.75

57

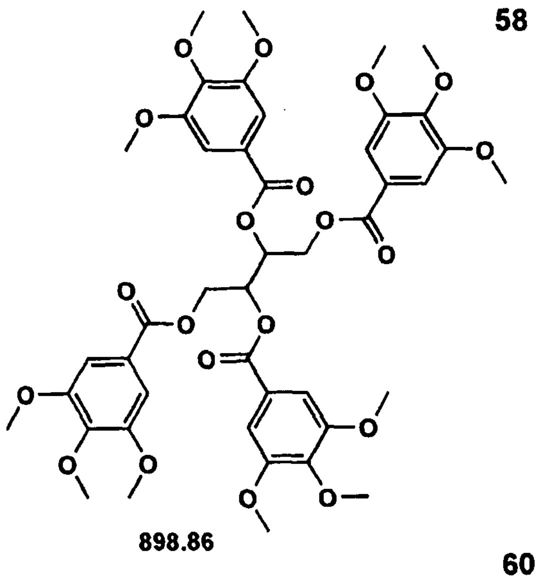

898.86

58

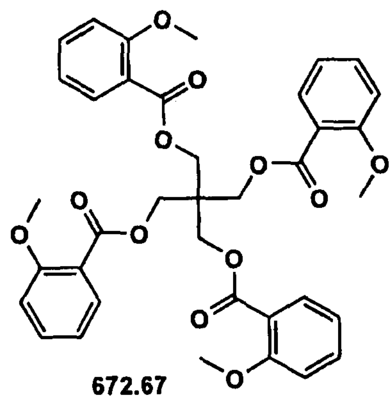

672.67

59

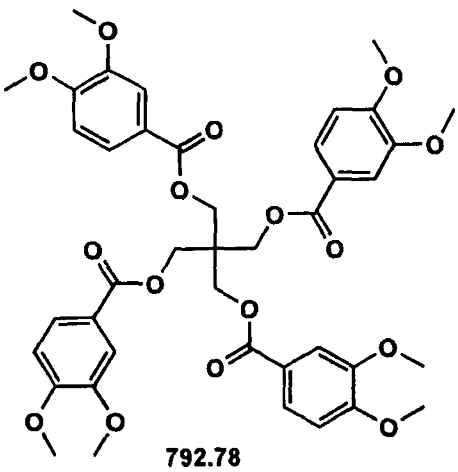

792.78

60

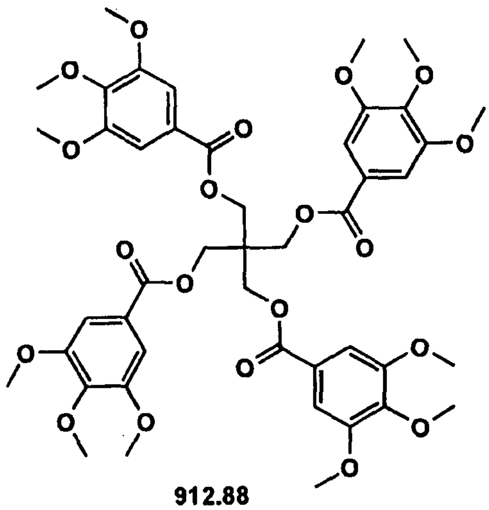

912.88

The optical film of the invention may further be combined with other plasticizers.

The ester compound as a preferred plasticizer of the invention, which is formed of the foregoing organic acid of formula (1) and polyvalent alcohol having a valence of 3 or more, is featured in that it exhibits enhanced compatibility with a cellulose ester and can be incorporated at a high ratio, so that no bleed-out occurs even when used with other plasticizers or additives and combined use with other plasticizers or additives are feasible.

When used with other plasticizers, the plasticizer of the formula (1) is contained preferably in an amount of not less than 50% by mass of all plasticizers, more preferably not less than 70% and still more preferably not less than 80%. The use within such a range can obtain a definite effect, such as enhanced flatness of melt-cast cellulose ester film, even when used in combination with other plasticizers.

There are cited the following plasticizers as preferred other plasticizers.

Ester Plasticizer formed of Polyvalent Alcohol and Monovalent Carboxylic Acid and Ester Plasticizer formed of Monovalent Alcohol and Polyvalent Carboxylic Acid

An ester plasticizer formed of a polyvalent alcohol and a monovalent carboxylic acid or an ester plasticizer formed of a monovalent alcohol and a polyvalent carboxylic acid is preferred, which exhibit enhanced compatibility with a cellulose ester.

Specific examples of plasticizers of an ethylene glycol ester as one of polyvalent alcohol esters include an

ethylene glycol alkyl ester plasticizer such as ethylene glycol diacetate and ethylene glycol dibutyrate; an ethylene glycol cycloalkyl ester plasticizer such as ethylene glycol dicyclopropylcarboxylate and ethylene glycol dicyclohexylcarboxylate; an ethylene glycol aryl ester plasticizer such as ethylene glycol dibenzoate and ethylene glycol di-4-methylbenzoate. These alkylate group, cycloalkylate group and arylate group are each the same or different, and may be substituted. Further, the alkylate group, cycloalkylate group and arylate group may be mixed or substituents may be bonded through a covalent bonding. Further, the ethylene glycol portion may be substituted and the partial structure of ethylene glycol may be a part of a polymer or may be regularly pendent thereto, or may be introduced into a part of the molecular structure of an additive such as an antioxidant, an acid scavenger or an ultraviolet absorber.

Specific examples of glycerin ester plasticizers as one of polyvalent alcohol esters include a glycerin alkyl ester such as triacetin, tributyrin, glycerin diacetate caprylate or glycerin oleate propionate; a glycerin cycloalkyl ester such as glycerin cyclopropylcarboxylate, or glycerin tricyclohexylcarboxylate; diglycerin aryl ester such as glycerin tribenzoate or glycerin 4-methylbenzoate; a diglycerin alkyl ester such as diglycerin tetraacetylate, diglycerin tetrapropionate, diglycerin acetate tricaprylate, or diglycerin tetralaurate; a diglycerin cycloalkyl ester such as diglycerin tetracyclobutylcarboxylate or diglycerin tetracyclopentylcarboxylate; and a diglycerin aryl ester such as diglycerin tetrabenzoate or diglycerin 3-methylbenzoate. These alkylate group, cycloalkylcarboxylate group and arylate group may each be the same or different, or may be substituted. The alkylate group, cycloalkylcarboxylate group and arylate group may be mixed or substituents may be bonded through a covalent bonding. Further, the glycerin or diglycerin portion may be substituted and the partial structure of a glycerin ester or diglycerin ester may be a part of a polymer or may be regularly pendent thereto, or may be introduced into a part of the molecular structure of an additive such as an antioxidant, an acid scavenger or an ultraviolet absorber.

Further, as other polyvalent alcohol ester plasticizers are cited those described in JP-A No. 2003-12823, paragraphs 30 - 33.

These alkylate group, cycloalkylcarboxylate group and arylate group may each be the same or different, or may be substituted. The alkylate group, cycloalkylcarboxylate group and arylate group may be mixed or substituents may be bonded through a covalent bonding. Further, the polyvalent alcohol portion may be substituted and the partial structure of the polyvalent alcohol may be a part of a polymer or may be pendent thereto, or may be introduced into a part of the molecular structure of an additive such as an antioxidant, an acid scavenger or an ultraviolet absorber.

Of ester plasticizers formed of the foregoing polyvalent alcohols and monovalent carboxylic acids, an alkylic polyvalent alcohol aryl ester is preferred and specific examples thereof include ethylene glycol dibenzoate, glycerin tribenzoate, diglycerin tetrabenzoate and exemplified compound 16 described JP-A 2003-12823, paragraph 32.

Specific examples of dicarboxylic acid ester plasticizers as one of polyvalent carboxylic acid esters include an alkyldicarboxylic acid alkyl ester plasticizer such as didodecyl malonate (C1), dioctyl adipate (C4) or dibutyl sebacate (c8); an alkyldicarboxylic acid cycloalkyl ester plasticizer such as dicylopentyl succinate or dicyclohexyl adipate; an alkyldicarboxylic acid aryl ester such as diphenyl succinate or di(4-methyl)phenyl glutarate; a cycloalkyl-di-carboxylic acid alkyl ester plasticizer such as dihexyl-1,4-cyclohexane cicarboxylate or didecylbicyclo[2.2.1]heptane-2,3-dicarboxylate; a cycloalkyldicarboxylic acid cycloalkyl ester plasticizer such as dicycloalkyl-1,2-cyclobutane dicarboxylate or dicyclopropyl-1,2-cyclohexyl dicarboxylate; acycloalkyldicarboxylic acid aryl ester plasticizer such as diphenyl-1,1-cyclopropyl dicarboxylate or di-2-naphthyl-1,4-cyclohexane dicarboxylate; an arylcarboxylic acid alkyl ester plasticizer such as diethyl phthalate, dimethyl phthalate, dioctyl phthalate, dibutyl phthalate or di-2-ethylhexyl phthalate; an aryldicarboxylic acid cycloalkyl ester plasticizer such as cyclopropyl phthalate or dicyclohexyl phthalate; and an aryldicarboxylic acid aryl ester plasticizer such as diphenyl phthalate or di-4-methylphenyl phthalate. These alkoxy group and cycloalkoxy group may each be the same or different, or may be mono-substituted, and these substituents may further be substituted. The alkyl group or cycloalkyl group may be mixed or these substituents may be bonded through a covalent bonding. Further, the aromatic ring of a phthalic acid may be substituted, and may be a polymer such as dimer, trimer, tetramer or the like. Further, the partial structure of a phthalic acid ester may be a part of a polymer or may be regularly pendent thereto, or may be introduced into a part of the molecular structure of an additive such as an antioxidant, an acid scavenger or an ultraviolet absorber.

Specific examples of other polycarboxylic acid ester plasticizers include an alkyl-polycarboxylic acid alkyl ester plasticizer such as tridecyl tricarbarate or tributyl-meso-butane-1,2,3,4-tetracarboxylate; an alkyl-polycarboxylic acid cycloalkyl ester plasticizer such as tricyclohexyl tricarbarate or tricyclopropyl-2-hydroxy-1,2,3-propanetricarboxylate; an alkylpolycarboxylic acid aryl ester plasticizer such as triphenyl-2-hydroxy-1,2,3-propanetricarboxylate or tetra-3-methylphenyltetrahydrofuran-2,3,4,5-tetracarboxylate; a cycloalkyl-polycarboxylic acid alkyl ester plasticizer such as tetrahexyl-1,2,3,4-cyclobutanetetracarboxylic acid or tetrabutyl-1,2,3,4-cyclopentanetetracarboxylic acid; a cycloalkyl-polycarboxylic acid cycloalkyl ester plasticizer such as tetracyclopropyl-1,2,3,4-cyclobutanetetracarboxylic acid or tricyclohexyl-1,3,5-cyclohexyltricarboxylate; a cycloalkyl-polycarboxylic acid aryl ester plasticizer such as triphenyl-1,3,5-cyclohexyltricarboxylate or hexa-4-methylphenyl-1,2,3,4,5,6-cyclohexylhexacarboxylate; an aryl-polycarboxylic acid alkyl ester plasticizer such as tridecylbenzene-1,2,4-tricarboxylate or tetraoctylbenzebe-1,2,4,5-tetracarboxylate; an arylpolycarboxylic acid cycloalkyl ester plasticizer such as tricyclopentylbenzene-1,3,5-tricarboxylate or tetracyclohexylbenzene-1,2,3,5-tetracarboxylate; and aryl-polycarboxylic acid aryl ester plasticizer such as triphenylbenzene-1,3,5-tetracarboxylate or hexa-4-methylphenylbenzene-1,2,3,4,5,6-hexacarboxylate. These alkoxy group and cycloalkoxy group may each be the same or different, or may be mono-substituted, and these substituents may further be substituted. The alkyl group or cycloalkyl group may be mixed or these substituents may be bonded through a covalent bonding. Further, the aromatic ring of a phthalic acid may be substituted, and may be a polymer such as dimer, trimer, tetramer or the like. Further, the partial structure of a phthalic acid ester may be a part of a polymer or may be regularly pendent thereto, or may be introduced into a part of the molecular structure of an additive such as an antioxidant, an acid scavenger or an ultraviolet absorber.

Of the foregoing ester plasticizers formed of a polycarboxylic acid and a mono-valent alcohol, a dialkylcarboxylic acid alkyl ester is preferred, and specifically including dioctyl adipate and tributyl phosphate.

Other Plasticizer

As other plasticizers usable in the invention are cited a phosphoric acid ester plasticizer and a polymer plasticizer.

Specific examples of phosphoric acid ester plasticizers include a phosphoric acid alkyl ester such as triacetyl phosphate or tributyl phosphate; a phosphoric acid cycloalkyl ester such as tricylopentyl phosphate or tricyclohexyl phosphate; and a phosphoric acid aryl ester such as triphenyl phosphate, tricresyl phosphate, crezylphenyl phosphate, octyldiphenyl phosphate, diphenyl-biphenyl phosphate, trioctyl phosphate, tributyl phosphate, trinaphthyl phosphate, trixylyl phosphate or tris-ortho-biphenyl phosphate. These substituents may be the same or different, and may be substituted. The alkyl group, cycloalkyl group and aryl group may be mixed and substituents may be bonded through a covalent bonding.

There are also cited an alkylenebis(dialkylphosphate) such as ethylenebis(dimethylphosphate) or butylenebis (diethylphosphate); an alkylenebis-(diarylphosphate) such as ethylenbis(diphenylphosphate) or propylenebis(dinaphthylphosphate); and an arylenebis(dialkylphosphate) such as phenylenebis-(dibutylphosphate), biphenylenebis(dioctylphosphate), and an arylenebis(diarylphosphate) such as phenylenebis(diphenylphosphate) or naphthylenebis-(ditoluylphosphate). These substituents may be the same or different, and may be substituted. The alkyl group, cycloalkyl group and aryl group may be mixed and substituents may be bonded through a covalent bonding. Further, the partial structure of a phthalic acid ester may be a part of a polymer or may be regularly pendent thereto, or may be introduced into a part of the molecular structure of an additive such as an antioxidant, an acid scavenger or an ultraviolet absorber. Of the foregoing compounds, a phosphoric acid aryl ester and an arylenebis(diarylphosphate) are preferred and specifically, triphenyl phosphate and phenylenebis(diphenylphosphate) are preferred.

Specifically, polymeric plasticizers include an aliphatic hydrocarbon polymer, an alicyclic hydrocarbon polymer, an acryl polymer such as poly(ethyl acrylate) or poly(methyl methacrylate), a vinyl polymer such as poly(vinyl isobutyrate) or poly-N-vinylpyrrolidone, a styrene polymer such as polystyrene or poly(4-hydroxystyrene), a polyester such as poly (butylene succinate), poly(ethylene terephthalate) or poly(ethylene naphthylate), a polyether such as polyethylene oxide or polypropylene oxide, a polymamide, a polyurethane and a polyurea. A number average molecular weight is preferably from 1,000 to 500,000 and more preferably from 5,000 to 200,000. A molecular weight of less than 1,000 causes problems in volatility and a molecular weight or ore than 500,000 results in reduced plasticity and adversely affects a mechanical property of cellulose ester film. These polymeric plasticizers may be a homopolymer comprised of a single repeating unit or a copolymer comprised of plural repeating units. Two or more of the foregoing polymers may be used in combination.

The optical film of the invention adversely affects optical uses when colored, so that the yellow index (YI) is preferably not more than 3.0 and more preferably not more than 1.0. The yellow index is determined based on JIS-K 7103.

Similarly to the afore-mentioned cellulose ester, the plasticizer used in the invention preferably removes impurities such as residual acids, inorganic salts and organic low-molecules which were carried-in from the production stage or generated during storage, and the purity thereof is preferably not less than 99%. Residual acids and water are each preferably 0.01 to 100 ppm, whereby thermal deterioration is restrained in melt-casting a cellulose resin, resulting in enhancements of film formation stability and optical and mechanic properties of the film.

Antioxidant

A cellulose ester undergoes accelerated degradation by not only heat but also oxygen under a high temperature environment in which melt film formation occurs, so that the optical film of the invention preferably contains an antioxidant as a stabilizer.

In the invention, it is also preferred to perform washing in the presence of an antioxidant when undergoing suspension-washing with a poor solvent. An antioxidant can indefinitely employ a compound capable of deactivating radicals generated in a cellulose ester or inhibiting deterioration of a cellulose ester, due to an oxygen-attached radical generated in the cellulose ester.

An antioxidant used in suspension-washing of a cellulose ester may remain in the cellulose ester after the

washing. The residual amount is preferably from 0.01 to 2000 ppm, more preferably from 0.05 to 1000 ppm, and still more preferably from 0.1 to 100 ppm.

Antioxidants usable in the invention may be any compound capable of inhibiting oxygen-deterioration of a melt-formed material and specifically useful antioxidants include, for example, a phenol compound, a hindered amine compound, a phosphorus compound, a sulfur compound, a heat-resistant process stabilizer and an oxygen scavenger. Of these, the phenol compound, the hindered amine compound, the phosphorus compound and the heat-resistant working stabilizer are preferred. Incorporation of such a compound can prevent coloring or reduced strength of the formed material due to heat or heat-oxidative deterioration during melt formation, without lowering transparency or heat-resistance. Such antioxidants may be used singly or in combination of two or more.

Phenol compounds are commonly known ones, for example, as described in U.S. Patent No. 4,839,405 in col. 12 - 14, including 2,6-dialkylphenol derivative compounds. Of such compounds is preferred a compound represented by the following formula (A):

formula (A)

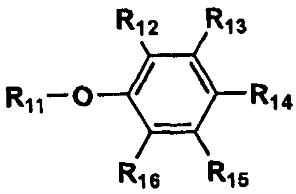

wherein $R_{11}$, $R_{12}$, $R_{13}$, $R_{14}$ and $R_{15}$ are each a substituent. Examples of such a substituent include a hydrogen atom, a halogen atom (e.g-., fluorine atom, chlorine atom), an alkyl group (e.g., methyl, ethyl, isopropyl, hydroxyethyl, methoxymethyl, trifluoromethyl, t-butyl), a cycloalkyl group (e.g., cyclopentyl, cyclohexyl), an aralkyl group (e.g., benzyl, 2-phenethyl), an aryl group (e.g., phenyl, naphthyl, p-tolyl, p-chlorophenyl), .an alkoxy group (e.g., methoxy, ethoxy, isoproxy, butoxy), an aryloxy group (e.g., phenoxy), a cyano group, an acylamino group (e.g., acetylamino, propionylamino), an alkylthio group (e.g., methylthio, ethylthio, butylthio), an arylthio group (e.g., phenylthio), a sulfonylamino group (e.g., methanesulfonylamino, benzenesulfonylamino), a ureido group (e.g., 3-methylureido, 3,3-dimethylureido, 1,3-dimethylureido), a sulfamoylamino group (e.g., dimetylsulfamoylamino), a carbamoyl group (e.g., methylcarbamoyl, ethylcarbamoyl, dimethylcarbamoyl), a sulfamoyl group (e.g., ethylsulfamoyl, dimethylsulfamoyl), an alkoxycarbonyl group (e.g., methoxycarbonyl, ethoxycarbonyl), an aryloxycarbonyl group (e.g., phenoxycarbonyl), a sulfonyl group (e.g., methanesulfonyl, butanesulfonyl, phenylsulfonyl), an acyl group (e.g., acetyl, propanoyl, butyloyl), an amino group (e.g., methylamino, ethylamino, dimethylamino), a cyano group, a hydroxy group, a nitro group, an amine oxide group (e.g., pyridine-oxy), an imido group (e.g., phthalamido), a disulfide group (e.g., benzenedisulfide, benzothiazolyl-2-disulfide), a carboxy group, a sulfo group and a heterocyclic group (e.g., pyrrole group, pyridyl group, pyrazolyl group, imidazolyl, pyridyl group, benzoimidazolyl group, benzthiazolyl group, benzoxazolyl group). These substituents may further be substituted. Of the phenol compounds represented by formula (A), a phenol compound, in which $R_{11}$ is a hydrogen atom, $R_{12}$ and $R_{16}$ are each t-butyl group, is preferred. Specific examples of such a phenol compound include n-octadecyl 3-(3,5-di-t-butyl-4-hydroxyphenyl)-propionate, n-octadecyl 3-(3,5-di-t-butyl-4-hydroxyphenyl)-acetate, n-octadecyl 3,5-dit-butyl-4-hydroxyphenyl)-acetate, n-octadecyl 3,5-di-t-butyl-4-hydroxybenzoate, n-hexyl 3,5-di-t-butyl-4-hydroxybenzoate, n-decyl 3,5-di-t-butyl-4-hydroxybenzoate, neo-dodecyl 3-(3,5-di-t-butyl-4-hydroxyphenyl)propionate, dodecyl β-(3,5-di-t-butyl-4-hydroxyphenyl)propionate, ethyl α-(4-hydroxy-3,5-dit-butylphenyl)isobutyrate, octadecyl α-(4-hydroxy-3,5-di-t-butylphenyl)isobutyrate, octadecyl α-(4-hydroxy-3,5-di-t-butylphenyl-4-hydroxyphenyl) propionate, 2-(n-octylthio)ethyl 3,5-di-t-butyl-4-hydroxy-benzoate, 2-(n-octylthio)ethyl 3,5-di-t-butyl-4-hydroxy-phenylacetate, 2-(n-octylthio)ethyl 3,5-di-t-butyl-4-hyroxy-phenylacetate, 2-(n-octylthio)ethyl 3,5-ditobutyl-4-hydroxyphenylacetate, 2-(n-octylthio)ethyl 3,5-di-t-butyl-4-hydroxy-benzoate, 2-(2-hydroxythio)ethyl 3,5-dit-butyl-4-hydroxybenzoate, diethylglycol bis-(3,5-di-t-butyl-4-hydroxy-phenyl)propionate, 2-(n-octadecylthio)ethyl-3(3,5-di-t-butyl-4-hydroxyphenyl)propionate, stearylamide N,N-bis-[ethylene-3-(3,5-di-t-butyl-4-hydroxyphenyl) propionate], n-butylimino N,N-bis-[ethylene-3-(3,5-di-t-butyl-4-hydroxyphenyl)propionate], 2-(2-2-stearoyloxyethylthio)ethyl 3,5-di-t-butyl-4-hydroxybenzoate, 2-(2-stearoyloxyethylthio)ethyl 7-(3-methyl-5-t0butyl-4-hydroxyphenyl)heptanoate, 1,2-propylene glycol bis[3-(3,5-dit-butyl-4-hydroxyphenyl)propionate], ethylene glycol bis-[3-(3,5-di-t-butyl-4-hydroxyphenyl)propionate], neopentylglycol bis-[3-(3,5-di-t-butyl-4-hydroxyphenyl)propionate], ethylene glycol bis-(3,5-di-t-butyl-4-hydroxyphenylacetate), glycerin-1-n-octadecanoate-2,3-bis-(3,5-di-t-butyl-4-hydroxyphenylacetate), pentaerythritol-tetrakis-[3-(3',5'-dit-butyl-4'-hydroxyphenyl) propionate], 1,1,1-trimethylolethane-tris-[3-(3,3-di-t-butyl-4-hydroxyphenyl)propionate], sorbitol hexa-[3-(3,5-di-t-butyl-4-hydroxyphenyl)propionate], 2-hydroxyethyl 7-(3-methyl-5-t-butyl-4-hydroxyphenyl)propionate, 2-stearoyloxyethyl

7-(3-methyl-5-t-butyl-4-hydroxyphenyl)heptanoate, 1,6-n-hexanediol-bis[(3',5'-di-t-butyl-4-hydroxyphenyl)propionate], and pentaerythritol-tetrakis(3,5-di-t-butyl-4-hydroxyhydrocinnamate). The foregoing type phenol compounds are commercially available from Ciba Special Chemicals, for example, trade name " Irganox 1076" and "Irganox 1010".

The foregoing hindered amine compound is preferably a compound represented by the following formula (B):

formula (B)

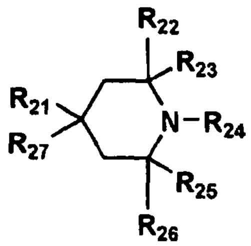

wherein $R_{21}$, $R_{22}$, $R_{23}$, $R_{24}$, $R_{25}$, $R_{26}$ and $R_{27}$ are each a substituent. The substituent is the same as defined in the foregoing formula (A). $R_{24}$ is preferably a hydrogen atom or a methyl group, $R_{27}$ is preferably a hydrogen atom, $R_{22}$, $R_{23}$, $R_{25}$ and $R_{26}$ are each preferably a methyl group. Specific examples of such a hindered amine compound include bis(2,2,6,6-tetramethyl-4-piperidyl)sebacate, bis(2,2,6,6-tetramethyl-4-piperidyl)succinate, bis(1,2,2,6,6-pentamethyl-4-piperidyl)sebacate,bis(N-octoxy-2,2,6,6-tetramethyl-4-piperidyl)sebacate, bis(N-bebzyloxy-2,2,6,6-tetramethyl-4-piperidyl)sebacate, bis(N-cyclohexyl-2,2,6,6-tetramethyl-4-piperidyl)sebacate, bis(1,2,2,6,6-pentamethyl-4-piperidyl) 2-(3,5-di-t-butyl-4-hydroxybenzyl)-2-butylmalonate, bis(1-acryloyl-2,2,6,6-tetramethyl-4-piperidyl)2,2-bis(3,5-di-t-butyl-4-hydroxybenzyl-2-butylmalonate, bis(1,2,2,6,6-pentamethyl-4-piperidyl)decanedioate, 2,2,6,6-tetramethyl-4-piperidylmethacrylate, 4-[3-(3,5-di-t-butyl-4-hydroxyphenyl)propionyloxy]-1-[2-(3-(3,5-di-t-butyl-4-hydroxy-phenyl)propionyloxy) ethyl]-2,2,6,6-tetramethylpiperidine, 2-methyl-2-(2,2,6,6-tetramethyl-4-piperidyl)amino-N-(2,2,6,6-tetramethyl-4-piperidyl) propioneamide, tetrakis(2,2,6,6-tetramethyl-4-piperidyl)-1,2,3,4-butanetetacarboxylate, and tetrakis(1,2,2,6,6-pentamethyl-4-piperidyl)-1,2,3,4-butanetetracarboxylate. There are also cited polymer type compounds and specific examples thereof include high molecular weight HALS in which plural piperidine rings are bonded through a triazine skeleton, such as a polycondensation product of N,N',N",N"'-tetrakis-[4,6-bis-[butyl-(N-methyl-2,2,6,6-tetramethylpiperidine-4-yl) amino]triazine-2-yi]-4,7-diazadacane-1,10-diamine, dibutylamine, 1,3,5-triazine-N,N'-bis(2,2,6,6-tetramethyl-4-piperidyl)-1,6-hexamethylenediamine and N-(2,2,6,6-tetramethyl-4-piperidyl(butylamine; a polycondensation product of dibutylamine, 1,3,5-triazine and N,N'-bis(2,2,6,6-tetramethyl-4-piperidyl)butylamine; poly[{(1,1,3,3-tetramethylbutyl)amino-1,3,5-triazine-2,4-diyl}{2,2,6,6-tetramethyl-4-piperidyl}imino]hexamethylene{(2,2,6,6-tetramethyl-4-piperidyl)imino} hexamethylene{(2,2,6,6-tetramethyl-4-piperidyl)imino}), a polycondensation product of 1,6-hexanediamine-N,N'-bis (2,2,6,6-tetramethyl-4-piperidyl) and morpholine-2,4,6-trichloro-1,3,5-triazine and poly[(6-morpholino-s-triazine-2,4-diyl) [2,2,6,6-tetramethyl-4-piperidyl]imino]hexamethylene[(2,2,6,6-tetramethyl-4-piperidyl)imino])); and compounds in which a piperidine ring is bonded through ester bonding, such as a polymer of dimethyl succinate and 4-hydroxy-2,2,6,6-tetramethyl-1-piperidine ethanol and a mixed esterified compound of 1,2,3,4-butanetetracarboxylic acid and 1,2,2,6,6-pentamethyl-4-piperidinol and 3,9-bis(2-hydroxy-1,1-dimethylethyl)-2,4,8,10-tetraoxaspiro[5,5]undecane, but are not limited to these. Of these are preferred a polycondensation product of dibutylamine, 1,3,5-triazine and N,N'-bis(2,26,6-tetramethyl-4-piperidyl)butylamine, poly[{1,1,3,3-tetramethylbutyl}amino-1,3,5-triazine-2,4-diyl]{(2,2,6,6-tetramethyl-4-piperidyl)imino}hexamethylene{2,2,6,6-tetramethyl-4-piperidyl}imino}], and a polymer of dimethyl succinate and 4-hydroxy-2,2-6,6-tetramethyl-1-piperidineethanol, each of which has a number average molecular weight of 2,000 to 5,000.

The foregoing type amine compounds are commercially available, for example, from Ciba Speciality Chemicals, as a trade name "Tinuvin 144" or "Tinuvin 770" and from Asahi Denka Kogyo Co., Ltd. as a trade name "ADK STAB LA-52".

The foregoing phosphorus compound is preferably a compound having, in the molecule, a partial structure represented by the following formula (C-1), (C-2) or (C-3):

formula (C-1)

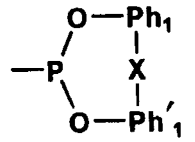

formula (C-2)

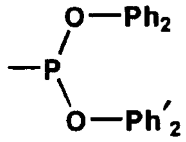

formula (C-3)

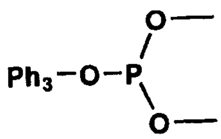

In the formulas, $Ph_1$ and $Ph'_1$ are each a phenylene group, provided that the hydrogen atom(s) of the phenylene group may be replaced by a phenyl group, an alkyl group having 1 to 8 carbon atoms, a cycloalkyl group having 5 to 8 carbon atoms, an alkylcycloalkyl group having 6 to 12 carbon atoms or an aralkyl group having 7 to 12 carbon atoms. $Ph_1$ and $Ph'_1$ may be the same or different. X is a single bond, a sulfur atom or $-CHR_6-$ in which $R_6$ is a hydrogen atom, an alkyl group having 1 to 8 carbon atoms or a cycloalkyl group having 5 to 8 carbon atoms. $Ph_2$ and $Ph'_2$ are each a phenyl group or a biphenyl group and the hydrogen atom(s) of the phenyl group or the biphenyl group may be replaced by a phenyl group, an alkyl group having 1 to 8 carbon atoms, a cycloalkyl group having 5 to 8 carbon atoms, an alkylcycloalkyl group having 6 to 12 carbon atoms or an aralkyl group having 7 to 12 carbon atoms. $Ph_2$ and $Ph'_2$ may be the same or different. $Ph_3$ is a phenyl group or a biphenyl group and the hydrogen atom(s) of the phenyl group or the biphenyl group may be replaced by a phenyl group, an alkyl group having 1 to 8 carbon atoms, a cycloalkyl group having 5 to 8 carbon atoms, an alkylcycloalkyl group having 6 to 12 carbon atoms or an aralkyl group having 7 to 12 carbon atoms. These groups may be substituted by a substituent as defined in the formula (A).

Specific examples of such a phosphorus compound include monophosphite compounds such as triphenyl phosphite, diphenyl isodecyl phosphite, phenyl diisodecyl phosphite, tris(nonylphenyl) phosphite, tris(dinonylphenyl) phosphite, tris(2,4-di-t-butylphenyl) phosphite, and 10-(3,5-di-t-butyl-4-hydroxybenzyl)-9,10-dihydro-9-oxa-10-phosphenthrene-10-oxide, 6-[3,(3-t-butyl-4-hydroxy-5-methylphenyl)propoxy]-2,4,8,10-tetra-t-butyldibenz[d,f][1.3.2]dioxaphosphepin; and diphosphite compounds such as 4,4'-butylidene-bis(3-methyl-6-t-butylphenyl-di-tridecylphosphite) and 4,4'-isopropylidene-bis(phenyl-di-alkyl($C_{12}$- $C_{15}$)phosphite). There are also cited phosphonite compounds such as tetrakis(2,4-di-t-butylphenyl)-4,4'-biphenylene diphosphonite and tetrakis(2,4-di-t-butyl-5-methylphenyl)4,4'-biphenylene diphosphonite. The foregoing phosphorus compounds are also commercially available, for example, trade names "Sumilizer GP" from Sumitomo Kagaku Kogyo Co., Ltd., "ADK STAB PEP-24G and "ADK STAB PEP-36" from Asahi Denka Kogyo Co., Ltd., "Irgafos P-EPQ from Ciba Speciality Chemicals and "GSY-P101" Sakai Kogyo Co., Ltd.

The foregoing sulfur compound is preferably a compound represented by the following formula (D):

formula (D) $\mathbf{R_{31}\text{-}S\text{-}R_{32}}$

In the formula (D), $R_{31}$ and $R_{32}$ are each a substituent. The substituent is the same as defined in the foregoing formula (A). $R_{31}$ and $R_{32}$ are each an alkyl group.

Specific examples of such a sulfur compound include dilauryl 3,3-thiodipropionate, myristyl 3,3'-thiodipropionate, distearyl 3,3-thiodipropionate, lauryl stearyl 3,3-thiodipropionate, pentaerythritol-tetrakis(β-lauryl-thio-propionate) and 3,9-bis(2-dodecylthioethyl)-2,4,8,10-tetraoxaspiro[5,5]undecane. The sulfur compounds are commercially available

from, for example, Sumitomo Kagaku Kogyo Co., Ltd., trade name "Sumilizer TPL-R" and "Sumilizer TP-D".

Examples of the heat-resistant process stabilizer include acryl compounds such as 2-tert-butyl-6-(3-tert-butyl-2-hydroxy-5-mentylbenzyl)-4-methyphenyl acrylate and 2-[1-(2-hydroxy-3,5-di-tert-pentylphenyl)ethyl]-4 and 6-di-tert-pentylphenyl acrylate; benzofuranone compounds such as 3-[4-(2-acetoxyethoxy)phenyl]-5,7-di-tert-butylbenzofuran-2-one, 5,7-di-tert-butyl-3-[4-(2-stearoyloxyethoxy)phenyl]benzofuran-2-one, 3,3'-bis[5,7-di-tert-butyl-3-(4-[2-hydroxyethoxy]phenyl)benzofuran-2-one], 5,7-di-tert-butyl-3-(4-methoxyphenyl)benzofuran-2-one, 5,7-di-tert-butyl-3-phenylbenzofuran-2-one, 5,7-di-tert-butyl-4-methyl-3-phenylbenzofuran-2-one3-(4-acetoxy-3,5-dimethylphenyl)-5,7-di-tert-butylbenzofuran-2-one, 3-(3,5-dimethyl-4-pivaloyloxyphenyl)-5,7-di-tert-butylbenzofuran-2-one3-(3,4-dimethylphenyl)-5,7-di-tert-butylbenzofuran-2-one and 3-(2,3-dimethylphenyl)-5,7-di-tert-butyl-benzofuran-2-one. The heat-resistant process stabilizers are commercially available from, for example, Sumitomo Kagaku Kogyo Co., Ltd., trade name "Sumilizer GM" and "Sumilizer GS".

Similarly to the afore-mentioned cellulose ester, the antioxidant used in the invention preferably removes impurities such as residual acids, inorganic salts and organic low-molecules which were carried-in from the production stage or generated during storage, and the purity thereof is preferably not less than 99%. Residual acids and water are each preferably 0.01 to 100 ppm, whereby thermal deterioration is restrained in melt-casting a cellulose resin, resulting in enhancements of film formation stability and optical and mechanic properties of the film.

Acid Scavenger

An acid scavenger is one which plays a role of trapping acids (protonic acids) remaining in cellulose ester carried-in from the production stage. When melting a cellulose ester, moisture in the polymer and heat accelerate hydrolysis and, for example, CAP produces acetic acid or propionic acid. Compounds cable of chemically bonding acids are usable, and examples thereof include, for example, compounds containing an epoxy, tertiary amine or ether structure, but are not limited to these.

Specifically, it is preferred to contain epoxy compound as an acid scavenger, described in U.S. Patent No. 4,137,201. Such epoxy compounds as an acid scavenger are known in the relevant technical field and include diglycidyl ethers of various polyethylene glycols, specifically, diglycidyl ethers of a polyglycol derived by condensation of 8 - 40 mols of ethylene oxide per mol of polyglycol or glycerol, metal epoxy compounds (for example, those which have been employed in or with the vinyl chloride polymer composition), an epoxydated ether condensation product, a diglycidyl ether of bisphenol A (or 4,4'-dihydroxydiphenyldimethylmethane), an epoxydated unsaturated fatty acid ester (specifically, 2-22 carbons fatty acid 4-2 carbons alkyl ester, e.g., butyl epoxy-stearate), various epoxydated long fatty acid triglyceride (epoxydated vegetable oil typified by, for example, epoxydated soybean oil, or unsaturated natural oil, which are also called an epoxydated natural glyceride or an unsaturated fatty acid, and these fatty acids generally have 12 - 22 carbon atoms). Specifically preferred compounds are commercially available epoxy group-containing epoxide resin, EPON 815c and an epoxydated ether oligomer condensation product, represented by the following formula (4):

formula (4)

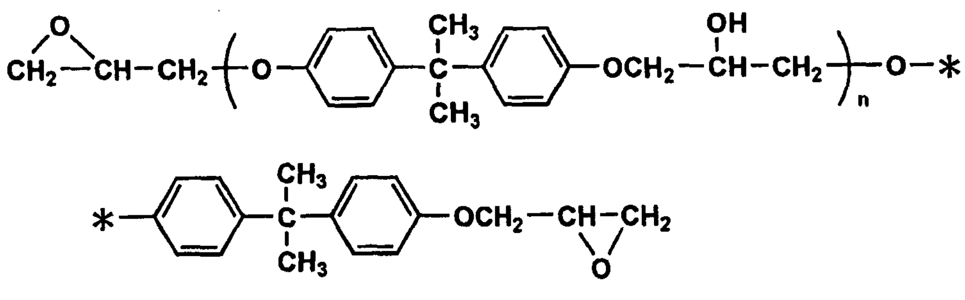

wherein n is an integer of 0 to 12. Further, acid scavengers usable in the invention include those described in JP-A No. 5-194788, paragraph 87 - 105.

Similarly to the afore-mentioned cellulose ester, the acid scavenger used in the invention preferably removes impurities such as residual acids, inorganic salts and organic low-molecules which were carried-in from the production stage or generated during storage, and the purity thereof is preferably not less than 99%. Residual acids and water are each preferably 0.01 to 100 ppm, whereby thermal deterioration is restrained in melt-casting a cellulose resin, resulting in enhancements of film formation stability and optical and mechanic properties of the film.

The acid scavenger is also designated as an acid trapping agent, an acid capturing agent or an acid catcher, but in the invention, but usable in the invention with no difference due to these designations.

Ultraviolet Absorber

An ultraviolet absorber is preferably one which excels in capability to absorb ultraviolet rays at wavelengths of 370 nm or less from the perspective of preventing deterioration of a polarizer or a display due to ultraviolet rays and exhibits reduced absorption of visible light of 400 nm or more from the perspective of a liquid crystal display. Examples thereof include oxybenzophenone compounds, benzotriazole compounds, salicylic acid ester compounds, benzophenone compounds, cyanoacrylate compounds, and nickel complex salt compounds and of these, benzophenone compounds and benzotriazole compounds with less coloring are preferred. The structure of an ultraviolet absorber may be a polymer such as a dimer, a trimer, a tetramer and the like, in which a plurality of ultraviolet absorbing sites exist in the molecule and there may be used, for example, ultraviolet absorbers described in JP-A Nos. 10-182621 and 8-337574 and polymeric ultraviolet absorbers described in JP-A No. 6-148430.

Specific examples of useful benzotriazole ultraviolet absorbers include 2-(2'-hydroxy-5'-methylphenyl)benzotriazole, 2-(2'-hydroxy-3',5'-di-tert-butylphenyl)benzotriazole, 2-(2'-hydroxy-3'-tert-butyl-5'-methylphenyl)benzotriazole, 2-(2'-hydroxy-3',5'-di-tert-butylphenyl)-5-chlorobenzotriazole, 2-(2'-hydroxy-3'-(3",4",5",6"-tetrahydrophthalimidomethyl)-57-methylphenyl)bebzotriazole, 2,2-methylenebis(4-(1,1,3,3-tetramethylbutyl)-6-(2H-benzotriazole-2-yl)phenol), 2-(2'-hydroxy-3'-tert-butyl-5'-methylphenyl)-5-chlorobenzotriazole, 2-(2H-benzotriazole-2-yl)-6-(straight or branched dodecyl)-4-methylphenol, a mixture of octyl-3-[3-tert-butyl-4-hydroxy-5-(chloro-2H-benzotriazole-2-yl)phenyl]propionate and 2-ethylhexyl-3-[3-tert-butyl-4-hydroxy-5-(5-chloro-2H-benzotriazole-2-yl)phenyl]propionate, 2-(2'-hydroxy-3'-(1-methyl-1-phenylethyl)-5'-(1,1,3,3-tetramethylbutyl)-phenyl)benzotriazole and 2-(2'-hydroxy-3',5'-di-(1-methyl-1-phenylethyl)-phenyl)benzotriazole, but are limited to these.

There are also usable TINUVIN 109, TINUVIN 171, TINUVIN 360 (which are commercially available from Ciba Speciality Chemicals).

Specific examples of benzophenone compounds include 2,4-dihydroxybenzophenone, 2,2'-dihydroxy-4-methoxybenzophenone, 2-hydroxy-4-methoxy-5-sulfobenzophenone and bis(2-methoxy-4-hydroxy-5-benzoylphenylmethane), but are not limited to these.

In the invention, an ultraviolet absorber is contained preferably in an amount of 0.1 to 20% by mass of the composition relating to the invention, more preferably 0.5 to 10% by mass, and still more preferably 1 to 5% by mass. These ultraviolet absorbers may be used singly or in combination. Viscosity Lowering Agent

In the invention, there may be added a hydrogen bonding solvent to reduce melt viscosity. The hydrogen bonding solvent refers to an organic solvent capable of forming a hydrogen atom-mediated "bond" caused between an electrically negative atom (e.g., oxygen, nitrogen, fluorine, chlorine) and a hydrogen atom covalent-bonded to the electrically negative atom, in other word, it means an organic solvent capable of arranging molecules approaching to each other with a large bonding moment and by containing a bond including hydrogen such as O-H ((oxygen hydrogen bond), N-H (nitrogen hydrogen bond) and F-H (fluorine hydrogen bond), as described in J.N. Israelachibiri, "Intermolecular Force and Surface Force" (translated by Tamotsu Kondo and Hiroyuki Oshima, published by McGraw-Hill. 1991). The hydrogen bonding solvent is capable of forming a hydrogen bond between celluloses stronger than that between molecules of cellulose resin, the melting temperature of a cellulose resin composition can be lowered by the addition of the hydrogen bonding solvent than the glass transition temperature of a cellulose resin alone in the melting casting method conducted in the present invention. Further, the melting viscosity of a cellulose resin composition containing the hydrogen bonding solvent can be lowered than that of a cellulose resin in the same melting temperature.

Examples of the hydrogen bonding solvents include alcohols such as methanol, ethanol, propanol, isopropanol, n-butanol, sec-butanol, t-butanol, 2-ethyl hexanol, heptanol, octanol, nonanol, dodecanol, ethylene glycol, propylene glycol, hexylene glycol, dipropylene glycol, polyethylene glycol, polypropylene glycol, methyl cellosolve, ethyl cellosolve, butyl cellosolve, hexyl cellosolve, and glycerol; ketones such as acetone and methyl ethyl ketone; carboxylic acids such as formic acid, acetic acid, propionic acid, and butyric acid; ethers such as diethyl ether, tetrahydrofuran, and dioxane; pyrolidone such as N-methylpyrolidone; and amines such as trimethylamine and pyridine. These hydrogen bonding solvents may be used singly or in combination of two or more. Of these, alcohols, ketones, and ethers are preferred, and especially, methanol, ethanol, propanol, isopropanol, octanol, dodecanol, ethylene glycol, glycerol, acetone, and tetrahydrofuran are preferred. Further, watersoluble solvents such as methanol, ethanol, propanol, isopropanol, ethylene glycol, glycerol, acetone, and tetrahydrofuran are specifically preferred. Herein, "watersoluble" means that the solubility in 100 g of water is 10 g or more.

Retardation Controlling Agent

In the optical film of the present invention, a polarizing plate treatment to provide an optical compensation

function may be conducted such that a liquid crystal layer is formed on an optical film by forming an orientation layer so as to combine the retardation of the optical film and that of the liquid crystal layer, or a polarizing plate protection film may be made to contain a compound for adjusting the retardation.
As a compound to be added to control the retardation can be employ an aromatic compound containing two or more aromatic rings as a retardation controlling agent, described in European Patent No. 911,656 A2 Two or more of such aromatic compounds may be used. The aromatic ring of such an aromatic compound includes not only an aromatic hydrocarbon ring but also an aromatic heterocycllic ring. An aromatic heterocyclic ring is specifically preferred such an aromatic heterocyclic ring is generally an unsaturated heterocyclic ring. In particular, compounds having 1,3,5-triazine ring are specifically preferred.

Matting Agent

The optical film of the invention may contain fine particles such as a matting agent to provide a lubricant property. Such fine particles include particulate inorganic compounds and particulate organic compounds. Matting agent particles are preferably as fine as possible. Examples of such fine particles include inorganic particles of metal oxides, metal phosphates, metal silicates and metal carbonates such as silicon dioxide, titanium dioxide, aluminum oxide, zirconium oxide, calcium carbonate, kaolin, talc, calcined calcium silicate, hydrated calcium silicate, aluminum silicate, magnesium silicate, or calcium phosphate; and crosslinked polymer particles. Of these, silicon dioxide, which results in reduced haze of the film is preferred. Fine particles such as silicon dioxide are often subjected to a surfacetreatment and such fine particles, which result in reduced haze, are preferred.
Preferred organic materials used for the surface treatment include halosilane, alkoxysilane, silazane, or siloxane. Fine particles of a larger average particle size results in an enhanced lubricant effect, while those of a smaller average particle size excel in transparency. The average secondary particle size of fine particles is preferably in the range of 0.05 to 1.0 μm, preferably frpm 5 to 50 nm, and more preferably from 7 to 14 nm. Incorporation of these fine particles to the optical film, which results in unevenness on the film surface, is preferably employed. The content of fine particles in cellulose ester is preferably from 0.005 to 0.3% by mass, based on cellulose ester.
Examples of silicon dioxide particles include AEROSIL 200, 200V, 300, R972, R972V, R974, R202, R812, OX 50 , TT600 and NAX50 (all of which are produced by Nihon Aerosil Co., Ltd. Of these are preferred AEROSIL 200V, R972, R972V, R974, R202 and R812. When two types of the particles are employed in combination, they may be mixed at an optional ratio to use. It is possible to use particles different in the average particle diameter or in materials, for example, AEROSIL 200V and R972V can be used at a weight ratio in the range of 0.1:99.9 to 99.9:0.1.
The presence of fine particles used as a matting agent within the film may also be employed for enhancement of film strength. The presence of fine particles within the film can enhance orientation of the cellulose ester.

Polymer Material

The optical film of the invention may be incorporated with a polymer material or an oligomer, other than a cellulose ester. Such a polymer material or an oligomer is preferably one which excels in compatibility with the cellulose ester and the formed film preferably exhibits at least 80% transmittance, more preferably at least 90%, and still more preferably at least 92%. The object of incorporating at least one of a polymer material and an oligomer includes the intension to control the viscosity at the time of heat-melting or to achieve enhancement of physical properties of the processed film. In that case, there may be incorporated additives, other than the foregoing ones.

Melt-Casting Film Formation

To obtain the optical film of the invention, the composition of a cellulose ester and additives is dried by hot air or in vacuo. Then, the composition is melt-extruded and formed into a film form through a T-shped die and brought into contact with a cooling drum by an electrostatic application method to be cooled and fixed, whereby an unoriented film is obtained. The temperature of the cooling drum is maintained preferably at 90 to 150 °C.
Melt-extrusion may be conducted by using a uniaxial extruder or a biaxial extruder. Alternatively, a uniaxial extruder may be connected downstream from a biaxial extruder. The use of a uniaxial extruder is preferred in terms of mechanical and optical characteristics of the obtained film. Further, it is preferred that the inside of a raw material tank, a raw material charging section or an extruder in the stage of supplying raw materials and melting is evacuated or displaced with inert gas such as nitrogen gas.
In the invention, the temperature at the time of melt-extrusion is preferably from 150 to 250 °C, and more preferably 200 to 240 °C.
In the preparation of a polarizing plate by using the optical film of the invention to produce a protective film of the polarizing plate, the optical film preferably is stretched in the width direction or in the direction of film production.

The unoriented film separated from the cooling drum is heated to a temperature, preferably in the range of the glass transition temperature (Tg) of the cellulose ester to Tg + 100 °C by means of a group of rolls and/or a heating device such as an infrared heater and is preferably subjected to single stage or multi-stahe longitidinal stretching. Subsequently, the thus longitudinally stretched optical film is preferably laterally stretched at a temperature of Tg to Tg-10 °C and then thermally fixed.

When performing lateral-stretching, the film is preferably stretched laterally in the area of stretching divided into two or more portions with the difference in temperature kept at 1 to 50 °C, while being successively raised, resulting in reduced variation in physical property in the lateral direction. Further, the laterally stretched film is maintained preferably at a temperatuer of not more than the final lateral-stretching temperature and not less than Tg-40 °C over a period of 0.01 to 5 min., resulting in further reduced variation in physical property in the leteral direction.

Thermal setting is performed at a temperature of not less than the final lateral-stretching temperature and not more than Tg-20 °C, usually over 0.5 to 300 sec. It is prefered that thermal setting is performed with successively heating, while maintaining the temperatuer difference in the region divided into at least two portions at 1 to 100 °C.

The thermally set film is usually cooled down to a temperature of not more than Tg and is wound while the clipped portions on both ends of the film are being cut off, in which the film is preferably subjected to a relaxation treatment of 0.1 to 10% in the lateral and/or longitudinal direction at a temperature of not more than the final thermo-setting temperature and not less than T. Cooling is gradually performed from the final thermo-setting temperature to Tg at a rate of not more than 100 °C per sec. The cooling and relaxation means are not specifically limited and any conventional means are applicable. Specifically, it is preferred to perform the foregoing treatment with successively cooling in plural temperature areas, in terms of enhancement of dimensional stability of the film. The cooling rate is represented by (T1 - Tg)/t where T1 is the final thermo-setting temperature, and t is the time for the film to reach Tg from the final thermo-setting temperature.

The further optimized conditions for the foregoing thermal setting conditions and cooling and relaxation conditions differaccording to the cellulose ester forming the film and are therefore determined by measuring physical properties of the biaxially stretched film and making adjustment to ensure that preferred properties will be achieved.

Stretching Operation and Refractive Index Control

The optical film of the invention can control the refractive index by employing the stretching operation, as described above. Thus, it is possible to achieve the refractive index in the preferred range by stretching the film at a factor of 1.0 - 2.0 in one direction of the cast cellulose ester and at a factor of 1.01 - 2.5 times in the perpendicular direction in the film surface.

For instance, it is possible to successively or simultaneously perform stretching in the longitudinal direction and in the direction prpendicular thereto in the film surface, namely across the width of the film. During the foregoing stretching, when the stretching ratio in one direction is excessively small, it is not possible to achieve sufficient retardation, while when it is excessively large, it becomes difficult to perform stretching, whereby film breakage occasionally occurs.

When stretching is performed in the melt cast direction and width-wise contraction is excessively large, the refractive index of the film thickness direction becomes excessively large. In that case, improvement is achieved by minimizing the width-wise contraction of the film or by performing width-wise stretching. In cases when width-wise stretching is performed, the resulting refractive index is occasionally distributed in the width direction. This occasionally occurs when using a tenter method. This phenomenon occurs in such a manner that performing width-wise stretching causes a contraction force in the central portion of the film, while the edge portions are fixed and result in the so-called bowing phenomenon. Even in that case, stretchin in the casting direction can inhibit the bowing phenomenon, reducing the phase-shift distribution in the width direction.

Further, stretching in the orthogonally biaxial directions can decrease thickness variation of the resulting film. An excessively large thickness variation of an optical film results in uneven phase difference, producing problems of non-uniformity such as coloration which occasionally occurs when the film is employed in liquid crystal displays.

Thickness variation of the optical film support is controlled preferably within the range of ±3% and more preferably ±1%. To minimize the thickness variation, an effective method is to perform stetching in the biaxial directions which are perpendiculat to each other. The stretching magnification in the orthogonally biaxial directions is finally preferably in the range of 1.0 - 2.0 in the cast direction and in the range of 1.01 - 2.5 in the width direction, and more preferably in the range of 1.01 - 1.5 in the cast direction and in the range of 1.05 - 2.0 times in the width direction.

When using a cellulose ester resulting in positive birefringence under stress, performing width-wise stretching can provide delayed phase axis of the optical film in the width direction. In that case, to enhance display quality, the delayed phase axis of the optical film is preferably in the width direction and satisfying the requirement: (stretching factor in the width direction)>(stretching factor in the cast direction).

The method for stretching the film is not specifically limited. Examples thereof include a method in which a plurality of rolls are run at different circumferential speeds and stretching is done in the casting direction by utilizing the

difference in circumferential speed between the rolls, a method in which both edges of the web are fixed with clips or pins and the spaces between the pins or clips are extended in the longitudinal direction to perform stretching in the longitudinak direction or extended in the lateral direction to perform stretching in the lateral direction, and a method in which simultaneously widening in the longitidinal and lateral directions performs stretching in the longitidinal and lateral directions. These methods may be combined. In addition, in the case of the so-called tenter method, smooth stretching can be conducted by driving the clip portion using a linear driving system, which is favored because it reduces the risk of, for example, rupture of the film.

Holding the width or stretching in the width direction in the process of forming the film is preferably performed by using a tenter, and may be performed by a pin tenter or a clip tenter.

When the optical film of the invention is used as a protective film for a polarizing plate, the protective film thickness is preferably 10 - 500 μm, more preferably not less than 20 μm, and still more preferably not less than 35 μm, while preferably not more than 150 μm and more preferably not more than 120 μm. The thickness is specifically preferably 25-80 μm. When the protective film is thicker than the above range, the polarizing plate after fabricated becomes too thick and is not suitable for liquid crystal displays used for note book type personal computers or mobile type electronic devices, specifically when the target is thin and light. Meanwhile, when it is thinner than the above range, sufficient retardation renders it difficult to achieve retardation and an excessively high moisture permeability results in reduced capability to protect the polarizer against moisture.

Provided that the polarizer protective film of the invention has a slow axis or a fast axis in the film plane and that the angle thereof between the casting direction of the film is designated as θ1, θ1 is preferably not less than -1° and not more than +1°, and more preferably not less than -0.5° and not more than +0.5°. θ1 is defined as an orientation angle, and can be measured by using an automatic birefringence analyzer KOBRA-21ADH (manufactured by Oji Scientific Instruments). When θ1 meets the foregoing relationship, high luminance is obtained as well as suppressing or preventing leakage of light in the displayed image, and faithful color reproduction is achieved in a color liquid crystal display.

Functional Layer

When manufacturing the optical film of the invention, a functional layer such as an antistatic layer, a hard coat layer, an antireflection layer, a lubricant layer, an adhesive layer, an antiglare layer, a barrier layer or an optical compensation layer may be coated before and/or after stretching. Specifically, it is preferred tp provide at least one selected from an antistatic layer, a hard coat layer, an antireflection layer, an adhesive layer, an antiglare layer and an optical compensation layer. In that case, various forms of surface treatment such as corona discharging, plasma processing, or chemical fluid treatment can optionally be provided.

In the process of film formation, the gripping portions of the clips on both ends of the film which has been trimmed off can be recycled as the material of the same type or different type of films, after having been pulverized, or after having been granulated, as required.

A laminated cellulose ester film can be produced by coextrusion of the compositions containing cellulose esters having different concentrations of additives such as the afore-mentioned plasticizer, ultraviolet absorber and matting agent. For example, there can be produced a cellulose ester film having a structure of skin layer/core layer/skin layer. For example, a large quantity of matting agent can be incorporated into the skin layer or the matting agent can be incorporated into only the skin layer. A larger amount of a plasticizer or ultraviolet absorber can be incorporated into the core layer than the skin layer or only into the core layer. Further, the types of the plasticizer or ultraviolet absorber can differ in the core layer or skin layer. For example, it is also possible to make an arrangement such that the skin layer contains a low-volatile plasticizer and/or ultraviolet absorber, and the core layer contains a plasticizer of excellent plasticity or an ultraviolet absorber of excellent ultraviolet absorption. The glass transition temperature may also differ between the skin layer and core layer. The glass transition temperature of the core layer is preferably lower than that of the skin layer. Further, the viscosity of the melt containing the cellulose ester at the time of melt-casting may differ between the skin layer and core layer. The viscosity of the skin layer may be greater than that of the core layer. Alternatively, the viscosity of the core layer may be equal to or greater than that of the skin layer. Dimensional Stability

The dimensional stability of the optical film of the invention is such that the fluctuation of the dimension at 80 °C and 90% RH is preferably less than ±1.0%, more preferably less than 0.5%, and still more preferably less than 0.1%, based on the dimension of a film which has been allowed to stand at 23 °C and 55% RH for 24 hrs.

When the optical film of the invention, used as a protective film for a polarizing plate falls within the foregoing range of diemnsional stability, the absolute retardation value and the orientation angle as a polarizing plate can be maintained, as originally set, whereby listed quality can be maintained even when aged over a long period of time.

Volatile Component Of Film

When an additive is present in the film compostion, such an additive can reduce or inhibit generation of a

volatile component due to alteration or decompostion for at least one of the film-constituting materials including a cellulose ester, a plasticizer, an antioxidant and optionally incorporated materials such as an ultraviolet absorber, a matting agent and a retardation controlling agent. The additive it self is required not to generate any volative component.

When the film composition is melted, the amount of the volatile component is desirably not more than 1% by mass, preferably not more than 0.5% by mass, more preferably not more than 0.2% by mass, and still more preferably not more than 0.1% by mass. In the invention, a differential thermogravimetric analizer (TG/DTA200, produced by Seiko Denshi Kogyou Co., Ltd.) is used to determine the weight loss on heating from 30 °C to 350 °C, which is defined as the amount of the volatile component.

Polarizing Plate

A polarizing plate can be prepared by conventional methods. The back face side of the optical film of the invention is subjected to an alkaline saponification treatment and adhered onto at least one side of a polarizing film made by immersion in an iodonium solution with stretching, by use of an aqueous solution of completely saponified polyvinyl alcohol. The optical film or other protective film for a polarizing plate may be provided on the other side. Preferably, there are used cellulose ester films (for example, Konica Minolta TAC, KC8 UX, KC4 UX, KC5 UX, KC8UCR3, KC8UCR4, KC8UY, KC4UY, KC12UR, KC8UCR-3, KC8UCR-4, KC8UCR-5, KC8UY-HA, KC8UX-RHA and KC8UX-RHA-N, manufactured by Konica Minolta Opt Inc.).

The polarizer film as the major component of the polarizing plate is an element that allows the passage of only the light on the plane of polarization in a predetermined direction. The typical polarizing film currently known is a polyvinyl alcohol film, including a iodine-dyed film and a dichroic-dyed one. There are used a polarizer film obtained by uniaxially stretching a film formed of an aqueous polyvinyl alcohol and dying it, or one obtained by uniaxially stretching the dyed film, followed by a treatment of a boron compound. One side of the optical film of the invention is adhered onto the surface of the polarizer film to form a polarizing plate. Preferably, adhesion is performed using a water-based adhesive composed mainly of a completely saponified polyvinyl alcohol.

A liquid polarizing plate using the optical film of the invention is built into a liquid crystal display, rendering it possible to produce a liquid crystal dislay which is superior at various visibilities. The optical film of the invention is preferably used in an LCD of a reflection type, a penetrating type or a half-transmission type, or in an LCD with various drive systems such as the TN type, STN type, OCB type, HAN type, VA type (PVA type, MVA type), and IPS type. Especially in a display having a screen larger than 30 type, in particular, a large screen of 30 type to 54 type, white spotting does not occur at the periphery of the screen, the effect is maintained for a long period of time, and prominent effects are observed in the MVA type liquid crystal display. In particular, color unevenness, glares and wave irregularities are little observed and effects that eyes do not get tired even with staring for a long period, are appreciated.

## EXAMPLES

The present invention will be further described with reference to examples but the invention is by no means limited to these. In examples, designations "part(s)" and "%" are used, which represent part(s) by mass and % by mass, unless otherwise noted.

EXAMPLE 1

Washing of cellose esters described below was conducted in the following manner.

Synthesis Of Cellulose Ester

Cellulose Ester C-1

There was used cellulose acetate propionate CAP482-20, produced by Eastman Chemical. Co.

Cellulose Ester C-2

There was used cellulose acetate butyrate CAB171-15, produced by Eastman Chemical. Co.

Cellulose Ester C-3

Synthesis was conducted according to the method described in Patent document 7, item 8, example B. Obtained cellulose acetate propionate exhibited a degree of acetyl substitution of 1.90, a degree of propionyl substitution of 0.71,

a number average molecular weight of 70000, a weight average molecular weight of 22000 and a molecular weight distribution of 3.1.

Molecular Weight Determination Of Cellulose Ester

The average molecular weight and molecular weight distribution of a cellulose ester can be determined by high speed liquid chromatography and the weight average molecular weight (Mw) was calculated by use thereof.
Measurement conditions are as follows.

Measurement Insrument: HLC-8220 GPC (produced by TOSO)
Solvent: tetrahydrofuran
Column: TSK gel Super HM-M
Column temperature: 40 °C
Sample concentration: 0.1% by mass
Flow rate: 0.6 ml/min
Calibration curve: A calibration curve prepared by 13 samples of standard polystyrene STK (produced by TOSO) having Mw = 1000000 - 500 was used. These 13 samples were used at approximately even intervals.

Determination Of Degree Of Substitution Of Cellulose Ester

Based on ASTM D817-96, the degree of substitution (DS) was determined in the manner described below.
There was precisely weighed 1.90 g of a dried cellulose ester, 70 ml of acetone and 30 ml of dimethylsulfoxide were added thereto, and further thereto was added 50 ml of acetone. Further thereto, 30 ml of an aqueous 1 mol/L sodium hydroxide solution was added with stirring to undergo saponification over 2 hrs. After 100 ml of hot water was added to wash the inner side of the flask, the reaction mixture was titrated with a 0.5 mol/L sulfuric acid by using a phenolphthalein as an indicator. After completion of titration, the supernatant solution was diluted 10 times and was subjected to ion chromatography according to the conventional manner to determine the organic acid composition. From the measurement result and the result of the acid composition analysis by ion chromatography, the degree of substitution was calculated according to the following equation:

$$TA = (B - A) \times F/(1000 \times W)$$

X =

$$X = 162.4 \times TA)/[1 - 42.14 \times TA + (1 - SA \times TA)\times(Y/X)]$$

$$Y = X \times (Y/X)$$

$$DS = X + Y$$

A: titration amount for sample (ml)
B: titration amount for blank test (ml)
F: titer of 0.5 mol/L sulfuric acid
W: mass of sample (g)
TA: total organic acid amount (mol/g)
Y/X: molar ratio of acid(s) except acetic acid to acetic acid, measured in ion chromatography
X: degree of substitution by acetic acid
Y: degree of substitution by acid(s) other than acetic acid
SA: increase of molecular weight when the hydroxyl group of cellulose ester being substituted by an acid other than acetic acid, corresponding to a value of molecular weight of acid other than acetic acid minus molecular weight of

water (18.02), which is, for example, 56.06 in the case of propionic acid and 116.16 in the case of caproic acid. Preparation of Washed Cellulose Ester C-1-1 to C-1-22

To 100 parts of cellulose ester C-1 were added 500 parts of methanol and 0.5 parts of Irganox 1010 as AO 1 (antioxidant) and stirred for 3 hr. at room temperature. Thereafter, the cellulose ester was filtered off and the obtained cellulose ester was dried for 3 hr. at 70 °C under ordinary pressure to obtain washed cellulose ester C-1-1. The free acid amount of C-1-1 was determined according to the method described in the item of free acid and the total amount of free acids such as carboxylic acid derivatives and an acid catalyst such as sulfuric acid remaining after suspension washing was 1 ppm. Washed cellulose esters C-1-2 through C-1-22 were also obtained using cellulose esters, solvents and antioxidants (AO 1, AO 2), as shown in Table 1. The free acid amounts of them are shown in Table 2.

Production of Cellulose Ester Pellet

The foregoing washed cellulose ester C-1-1 (CAP482-20, produced by Eastman Chemical. Co.) was dried for 2 hr. at 130 °C in air under ordinary pressure and then cooled down to room temperature. To the washed cellulose ester C-1-1 were added the following compounds at amounts described below and the mixture was extruded by a twin-screw melt extruder under melting conditions of 230 °C and 200 rpm to prepare strands. The strands were cut to prepare pellets, whereby cellulose ester pellet P-1-1 was obtained.

| | |
|---|---|
| C-1-1 | 100 parts by mass |
| Plasicizer of Compound 48 of formula (1) | 10 parts by mass |
| LA31 (UV absorber) | 1.0 part by mass |
| Irganox 1010 (antioxidant) | 0.5 part by mass |
| Sumilizer GP (antioxidant) | 3.0 parts by mass |
| Epoxylated soy bean oil (acid scavenger) | 1.0 part by mass |
| Aerozil R972V (matting agent) | 0.3 parts by mass |

Cellulose ester pellet samples P-1-2 through P-1-22 were each produced in the same manner as P-1-1, except that C-1-1 was replaced by each of C-1-2 to C-1-22.

The free acid amount of P-1-1 was determined according the method described in the item of free acid and the total amount of free acids such as carboxylic acid derivatives and an acid catalyst such as sulfuric acid remaining after suspension washing was 9 ppm. The free acid contents of these samples are also shown in Table 2. Production of Cellulose Ester Film

The thus produced cellulose ester pellet P-1-1 was dried at 130 °C for 2 hr. in air under ordinary pressure and then cooled down to room temperature. The mixture was heated and melted at a melting temperature 230 °C, and melt-extruded through a T-shape die and stretched at a temperature of 160 °C and a stretching ratio of 1.2x1.2. As a result, a 80 μm thick film was obtained (Sample 1-1).

Compounds shown in Table 1 employed the following compounds.

Irganox 245: product of Ciba Specialty Chemicals Co.
Irganox 1098: product of Ciba Specialty Chemicals Co.
Sumilizer GA-80: product of SUMITOMO CHEMICAL CO., LTD.
Sumilizer BBM-S: product of SUMITOMO CHEMICAL CO., LTD.

Table 1

| Washed cellulose Ester | Cellulose Solvent Ester | Solvent | Amount (part by mass) | Solvent (part by mass) | Amount (part by mass) | AO 1 (part by mass) | Amount (part by mass) | AO 2 (part by mass) | Amount (part by mass) | Remark |
|---|---|---|---|---|---|---|---|---|---|---|
| C-1-1 | C-1 | methanol | 500 | - | - | Irganox 1010 | 0.5 | - | - | Inv. |
| C-1-2 | C-1 | methanol | 500 | - | - | Irganox 1076 | 0.5 | - | - | Inv. |
| C-1-3 | C-1 | methanol | 500 | - | - | Irganox 1098 | 0.5 | - | - | Inv. |
| C-1-4 | C-1 | methanol | 500 | - | - | Irganox 245 | 0.5 | - | - | Inv. |
| C-1-5 | C-1 | methanol | 500 | - | - | Sumilizer GA-80 | 0.5 | - | - | Inv. |
| C-1-6 | C-1 | methanol | 500 | - | - | Sumilizer BBM-S | 0.5 | - | - | Inv. |
| C-1-7 | C-1 | methanol | 500 | - | - | Irganox 1010 | 0.3 | Irganox 245 | 0.2 | Inv. |
| C-1-8 | C-1 | methanol | 500 | - | - | Irganox 1010 | 0.25 | Sumilizer BBM-S | 0.25 | Inv. |
| C-1-9 | C-1 | heptane | 500 | - | - | Irganox 1010 | 0.5 | - | - | Inv. |
| C-1-10 | C-1 | octane | 500 | - | - | Irganox 1010 | 0.5 | - | - | Inv. |
| C-1-11 | C-1 | toluene | 500 | - | - | Irganox 1010 | 0.5 | - | - | Inv. |
| C-1-12 | C-1 | diethyl ether | 500 | - | - | Irganox 1010 | 0.5 | - | - | Inv. |
| C-1-13 | C-1 | diisopropyl ether | 500 | - | - | Irganox 1010 | 0.5 | - | - | Inv. |
| C-1-14 | C-1 | ethanol | 500 | - | - | Irganox 1010 | 0.5 | - | - | Inv. |
| C-1-15 | C-1 | Butanol | 500 | - | - | Irganox 1010 | 0.5 | - | - | Inv. |
| C-1-16 | C-1 | methanol | 480 | Tetrahydrofuran | 20 | Irganox 1010 | 0.5 | - | - | Inv. |
| C-1-17 | C-1 | heptane | 450 | Acetone | 50 | Irganox 1010 | 0.5 | - | - | Inv. |
| C-1-18 | C-2 | methanol | 500 | - | - | Irganox 1010 | 0.5 | - | - | Inv. |
| C-1-19 | C-3 | methanol | 500 | - | - | Irganox 1010 | 0.5 | - | - | Inv. |
| C-1-20 | C-1 | water | 500 | - | - | Irganox 1010 | 0.5 | - | - | Comp. |

(continued)

| Washed cellulose Ester | Cellulose Solvent Ester | Solvent | Amount (part by mass) | Solvent (part by mass) | Amount (part by mass) | AO 1 (part by mass) | Amount (part by mass) | AO 2 (part by mass) | Amount (part by mass) | Remark |
|---|---|---|---|---|---|---|---|---|---|---|
| C-1-21 | C-2 | water | 500 | - | - | Irganox 1010 | 0.5 | - | - | Comp. |
| C-1-22 | C-3 | water | 500 | - | - | Irganox 1010 | 0.5 | - | - | Comp. |

The thus produced cellulose films ere each evaluated in the manner described below. Results thereof are shown in Table 2.

Evaluation

Coefficient of Variation (CV) of Retardation

Retardation of each of the obtained cellulose ester samples was measured at intervals of 1 cm in the width direction and represented by a coefficient of variation (CV) of retardation, obtained by the equation described below. Using an automatic double-refractometer KOBURA 21ADH (produced by Oji Keisokuki Co., Ltd.), determinatin of a three dimemsional double-refractive index was conducted under an environment of 23 °C and 55% RH at a wavelength of 590 nm and at intervals of 1 cm in the width direction of the sample, and measured values were substituted into the following equations:

$$\text{In-plane retardation } Ro=(nx - ny) \times d$$

$$\text{Thickness direction retardation } Rt=[(nx - ny)/2 - nz] \times d$$

wherein d is a film thickness (nm), nx is a refractive index (the maximum refractive index in-plane of the film and also denoted as a refractive index in the retarded phase axis direction), ny is a refractive index in the plane of the film and perpendicular to the retarded phase axis, and nz is a refractive index in the thicness direction of the film. The standard deviation of each of the obtained in-plane and thickness-directional retardations was determined by the (n-1) method. A coefficient of variation (CV) was calculated as below and employed as a measure of distribution of retardation. In the measurement, n is set at 130 - 140.

$$\text{Coefficient of variation (CV)} = \text{standard deviation/ average retardation value}$$

A: variation (CV) of less than 1.5%,
B: variation (CV) of not less than 1.5% and less than 5%,
C: variation (CV) of not less than 5% and less than 10%,
D: variation (CV) of not less than 10%.

Preparation of Polarizing Plate

A 120 μm thick polyvinyl alcohol film was immersed in an aqueous solution containing 1 part by mass of iodine, 2 parts by mass of potassium iodide and 4 parts by mass of boric acid, and stretched at a factor of four at 50 °C to prepare a polarizer film.

Cellulose ester films of samples 1-1 through 1-22 were each alkali-treated in an aqueous 2.5 M sodium hydroxide solution at 40 °C over 60 sec. and the washed and dried surface thereof was alkali-treated.

The alkali-treated surface of each of cellulose ester film of samples 1-1 through 1-22 was adhered onto both sides of a polarizer by using an aqueos 5% solution of a completely saponified polyvinyl alcohol to prepare protective film-formed polarizing plates 1-1 through 1-22.

Evaluation as Liquid Crystal Display

The polarizing plate of a 15-type TFT color liquid crystal display LA-1529HM (produced by NEC) was removed and each of the prepared polarizing plates was cut to a size fitted into a liquid crystal cell. Two sheets of the polarizing plate were adhered to the liquid crystal cell to sandwich the liquid crystal so that polarizing axes of the polarizing plates were unaltered and mutually orthogonal, whereby a 15-type TFT color liquid crystal display was prepared to evaluate characteristics as an image display. Evaluation of Frontal Contrast

Measurement was conducted after lighting up a backlight of a liquid crystal display and allow it to stand for 30 min. under an environment of 23 °C and 55% RH. Using EZ-Contrast 160D, produced by ELDIM Co., frontal luminances of a white display and a black display were measured and their ratio was defined as frontal contrast. A higher value represents a superior contrast.

Frontal contrast = front luminance of white display/ front luminance of black display

Table 2

| Sample No. | Free Acid Content (ppm) | Retardation Variation | Contrast | Remark |
|---|---|---|---|---|
| 1-1 | 9 | A | 830 | Inv. |
| 1-2 | 13 | A | 780 | Inv. |
| 1-3 | 11 | B | 750 | Inv. |
| 1-4 | 15 | A | 765 | Inv. |
| 1-5 | 15 | A | 765 | Inv. |
| 1-6 | 10 | A | 775 | Inv. |
| 1-7 | 16 | A | 790 | Inv. |
| 1-8 | 14 | A | 745 | Inv. |
| 1-9 | 19 | A | 710 | Inv. |
| 1-10 | 50 | B | 730 | Inv. |
| 1-11 | 33 | B | 725 | Inv. |
| 1-12 | 37 | B | 755 | Inv. |
| 1-13 | 18 | A | 765 | Inv. |
| 1-14 | 16 | A | 740 | Inv. |
| 1-15 | 20 | B | 775 | Inv. |
| 1-16 | 4 | B | 760 | Inv. |
| 1-17 | 1 | B | 765 | Inv. |
| 1-18 | 13 | A | 815 | Inv. |
| 1-19 | 8 | A | 840 | Inv. |
| 1-20 | 89 | E | 525 | Comp. |
| 1-21 | 80 | D | 605 | Comp. |
| 1-22 | 112 | C | 510 | Comp. |

It is apparent from Table 2 that inventive samples 1-1 through 1-19 exhibit reduced free acid amounts, excel in retadation variation and front contrast as a polarizing plate and a liquid crystal display, and are optically excellent, as compared to comparative samples 1-20 through 1-22.

Similar effects were achieved even when the solvent used for washing cellulose ester was replaced by cyclohexane, toluene, dipropyl ether, propyl alcohol or diisopropyl ether.

Similar effects were achieved even when the antioxidant used in washing cellulose ester was replaced by Irganox 565, Irganox 311 (produced by Ciba Specialty Chemicals), ADK STAB AO-330, ADK STAB AO-30 or ADK STAB AO-40 (produced by Asahi Denka Kogyo Co., Ltd.).

Similar effects were achieved even when 0.5 parts by mass of Irganox 1010 and 3.0 parts by mass of Sumilizer GP used in production of cellulose ester film were replaced by 0.5 parts by mass of Tinuvin 144, 3.0 parts by mass of

Sumilizer GP, 0.5 parts by mass of Irganox 1010 and 0.25 parts by mass of ADK STAB LA-52.

EXAMPLE 2

Washed celulose esters C-2-1 through C-2-42 and cellulose ester pellets P-2-1 through P-2-42 were each prepared in the same manner as Example 1, except that washed cellulose esters, solvents, AO agents and their amounts were varied, as shown in Tables 3 and 4. Using these cellulose ester pellets, cellulose ester film samples 2-1 through 2-42 (each having a film thickness of 80 μm) were prepared similarly to Example 1.
Compounds shown in Tables 3 and 4 are as follows:

Chimassorb 944: production of Ciba Specialty Chemicals
Cyasorb UV-3529: production of Cytec
Irgafos P-EPQ: production of Ciba Specialty Chemicals
Irgafos 12: production of Ciba Specialty Chemicals

Table 3

| Washed cellulose Ester | Cellulose Ester | Solvent | Amount (part by mass) | Solvent | Amount (part by mass) | AO 1 | Amount (part by mass) | AO 2 | Amount (part by mass) | Remark |
|---|---|---|---|---|---|---|---|---|---|---|
| C-2-1 | C-1 | methanol | 500 | - | - | Tinuvin 770 | 0.5 | - | - | Inv. |
| C-2-2 | C-1 | methanol | 500 | - | - | ADKSTABLA-52 | 0.5 | - | - | Inv. |
| C-2-3 | C-1 | methanol | 500 | - | - | CHIMASSORB944 | 0.5 | - | - | Inv. |
| C-2-4 | C-1 | methanol | 500 | - | - | Cyasorb UV-3529 | 0.5 | - | - | Inv. |
| C-2-5 | C-1 | methanol | 500 | - | - | Tinuvin 770 | 0.2 | Irganox 1010 | 0.3 | Inv. |
| C-2-6 | C-1 | methanol | 500 | - | - | ADKSTABLA-52 | 0.2 | Irganox 245 | 0.3 | Inv. |
| C-2-7 | C-1 | methanol | 500 | - | - | Irgafos P-EPQ | 0.5 | - | - | Inv. |
| C-2-8 | C-1 | methanol | 500 | - | - | Irgafos 12 | 0.5 | - | - | Inv. |
| C-2-9 | C-1 | methanol | 500 | - | - | PEP-24G | 0.5 | - | - | Inv. |
| C-2-10 | C-1 | methanol | 500 | - | - | PEP-36 | 0.5 | - | - | Inv. |
| C-2-11 | C-1 | methanol | 500 | - | - | Irgafos P-EPQ | 0.3 | Irganox 1010 | 0.3 | Inv. |
| C-2-12 | C-1 | methanol | 500 | - | - | PEP-36 | 0.3 | Sumilizer BBM-S | 0.3 | Inv. |
| C-2-13 | C-1 | methanol | 500 | - | - | Sumilizer TPL-R | 0.5 | - | - | Inv. |
| C-2-14 | C-1 | methanol | 500 | - | - | Sumilizer TP-D | 0.5 | - | - | Inv. |
| C-2-15 | C-1 | methanol | 500 | - | - | Sumilizer TPL-R | 0.3 | Irganox 1010 | 0.3 | Inv. |
| C-2-16 | C-1 | heptane | 500 | - | - | ADKSTABLA-52 | 0.5 | - | - | Inv. |
| C-2-17 | C-1 | octane | 500 | - | - | Tinuvin770 | 0.2 | Irganox 1010 | 0.3 | Inv. |
| C-2-18 | C-1 | toluene | 500 | - | - | Sumilizer TPL-R | 0.3 | Irganox 1010 | 0.3 | Inv. |
| C-2-19 | C-1 | diethyl ether | 500 | - | - | Tinuvin 770 | 0.5 | - | - | Inv. |
| C-2-20 | C-1 | diisopropyl ether | 500 | - | - | PEP-36 | 0.3 | Sumilizer BBM-S | 0.3 | Inv. |
| C-2-21 | C-1 | ethanol | 500 | - | - | PEP-36 | 0.5 | - | - | Inv. |

Table 4

| Washed cellulose Ester | Cellulose Ester | Solvent | Amount (part by mass) | Solvent | Amount (part by mass) | AO 1 | Amount (part by mass) | AO 2 | Amount (part by mass) | Remark |
|---|---|---|---|---|---|---|---|---|---|---|
| C-2-22 | C-1 | butanol | 500 | - | - | ADKSTABLA-52 | 0.2 | Irganox 245 | 0.3 | Inv. |
| C-2-23 | C-1 | methanol | 480 | tetrahydrofuran | 20 | Tinuvin 770 | 0.5 | - | - | Inv. |
| C-2-24 | C-1 | heptane | 450 | acetone | 50 | Sumilizer TPL-R | 0.5 | - | - | Inv. |
| C-2-25 | C-2 | methanol | 500 | - | - | ADKSTABLA-52 | 0.5 | - | - | Inv. |
| C-2-26 | C-2 | methanol | 500 | - | - | ADKSTABLA-52 | 0.2 | Irganox 245 | 0.3 | Inv. |
| C-2-27 | C-2 | methanol | 500 | - | - | PEP-36 | 0.5 | - | - | Inv. |
| C-2-28 | C-2 | methanol | 500 | - | - | PEP-36 | 0.3 | Sumilizer BBM-S | 0.3 | Inv. |
| C-2-29 | C-2 | methanol | 500 | - | - | Sumilizer TPL-R | 0.5 | - | - | Inv. |
| C-2-30 | C-2 | methanol | 500 | - | - | Sumilizer TPL-R | 0.3 | Irganox 1010 | 0.3 | Inv. |
| C-2-31 | C-3 | methanol | 500 | - | - | ADKSTABLA-52 | 0.5 | - | - | Inv. |
| C-2-32 | C-3 | methanol | 500 | - | - | ADKSTABLA-52 | 0.2 | Irganox 245 | 0.3 | Inv. |
| C-2-33 | C-3 | methanol | 500 | - | - | PEP-36 | 0.5 | - | - | Inv. |
| C-2-34 | C-3 | methanol | 500 | - | - | PEP-36 | 0.3 | Sumilizer BBM-S | 0.3 | Inv. |
| C-2-35 | C-3 | methanol | 500 | - | - | Sumilizer TPL-R | 0.5 | - | - | Inv. |
| C-2-36 | C-3 | methanol | 500 | - | - | Sumilizer TPL-R | 0.3 | Irganox 1010 | 0.3 | Inv. |

(continued)

| Washed cellulose Ester | Cellulose Ester | Solvent | Amount (part by mass) | Solvent | Amount (part by mass) | AO 1 | Amount (part by mass) | AO 2 | Amount (part by mass) | Remark |
|---|---|---|---|---|---|---|---|---|---|---|
| C-2-37 | C-1 | water | 500 | - | - | Tinuvin 770 | 0.5 | - | - | Comp. |
| C-2-38 | C-1 | water | 500 | - | - | Tinuvin 770 | 0.2 | Irganox 1010 | 0.3 | Comp. |
| C-2-39 | C-2 | water | 500 | - | - | PEP-36 | 0.5 | - | - | Comp. |
| C-2-40 | C-2 | water | 500 | - | - | PEP-36 | 0.3 | Sumilizer BBM-S | 0.3 | Comp. |
| C-2-41 | C-3 | water | 500 | - | - | Sumilizer TPL-R | 0.5 | - | - | Comp. |
| C-2-42 | C-3 | water | 500 | - | - | Sumilizer TPL-R | 0.3 | Irganox 1010 | 0.3 | Comp. |

Similarly to Example 1, there were evaluated the total amount of free acids such as carboxylic acid derivatives and an acid catalyst such as sulfuric acid remaining in cellulose ester pellets and the prepared cellulose ester films, and evaluation results thereof are shown in Table 5.

Table 5

| Sample No. | Free Acid Content (ppm) | Retardation Variation | Contrast | Remark |
|---|---|---|---|---|
| 2-1 | 5 | A | 790 | Inv. |
| 2-2 | 8 | A | 820 | Inv. |
| 2-3 | 6 | B | 770 | Inv. |
| 2-4 | 9 | B | 795 | Inv. |
| 2-5 | 7 | A | 780 | Inv. |
| 2-6 | 6 | A | 745 | Inv. |
| 2-7 | 13 | A | 795 | Inv. |
| 2-8 | 11 | A | 815 | Inv. |
| 2-9 | 10 | A | 785 | Inv. |
| 2-10 | 12 | A | 725 | Inv. |
| 2-11 | 15 | A | 710 | Inv. |
| 2-12 | 16 | A | 755 | Inv. |
| 2-13 | 11 | A | 775 | Inv. |
| 2-14 | 12 | B | 775 | Inv. |
| 2-15 | 12 | A | 740 | Inv. |
| 2-16 | 17 | A | 715 | Inv. |
| 2-17 | 44 | B | 740 | Inv. |
| 2-18 | 50 | B | 725 | Inv. |
| 2-19 | 34 | B | 735 | Inv. |
| 2-20 | 20 | A | 750 | Inv. |
| 2-21 | 12 | A | 765 | Inv. |
| 2-22 | 17 | B | 765 | Inv. |
| 2-23 | 3 | B | 785 | Inv. |
| 2-24 | 1 | B | 790 | Inv. |
| 2-25 | 15 | A | 785 | Inv. |
| 2-26 | 16 | A | 820 | Inv. |
| 2-27 | 11 | A | 790 | Inv. |
| 2-28 | 9 | A | 760 | Inv. |
| 2-29 | 14 | B | 825 | Inv. |
| 2-30 | 13 | A | 765 | Inv. |
| 2-31 | 13 | A | 810 | Inv. |
| 2-32 | 11 | A | 800 | Inv. |
| 2-33 | 10 | A | 780 | Inv. |
| 2-34 | 12 | A | 820 | Inv. |
| 2-35 | 14 | A | 790 | Inv. |

(continued)

| Sample No. | Free Acid Content (ppm) | Retardation Variation | Contrast | Remark |
|---|---|---|---|---|
| 2-36 | 13 | A | 845 | Inv. |
| 2-37 | 156 | E | 595 | Comp. |
| 2-38 | 139 | D | 580 | Comp. |
| 2-39 | 103 | E | 555 | Comp. |
| 2-40 | 178 | D | 570 | Comp. |
| 2-41 | 92 | E | 600 | Comp. |
| 2-42 | 115 | C | 540 | Comp. |

It is apparent from Table 5 that inventive samples 2-1 through 2-36 exhibit reduced free acid amounts, excel in retadation variation and front contrast as a polarizing plate and a liquid crystal display, and are optically excellent, as campared to comparative samples 2-37 through 2-42.

Similar effects were achieved even when the solvent used for washing cellulose ester was replaced by cyclohexane, toluene, dipropyl ether, propyl alcohol or diisopropyl ether.

Similar effects were achieved even when the antioxidant AO 1 used in washing cellulose ester was replaced by 0.5 parts by mass of any one of ADK STAB LA-57, Chimassorb 2020, LP-63P, LP-68LD and Cyasorb UV-3364, or a combination of 0.2 parts by mass of the foregoing hindered amine and 0.3 parts by mass of any one of Irganox 245 and Sumilizer BBM-S.

Similar effects were achieved even when the AO 1 used in washing cellulose ester was replaced by 0.5 parts by mass of any one of ADK STAB PEP-8, ADK STAB 2112, ADK STAB 135A, ADK STAB HP-10, Sumilizer TL, Sumilizer and Sumilizer TPS, or a combination of 0.3 parts by mass of the foregoing hindered amine and 0.3 parts by mass of any one of Irganox 1010, Irganox 245 and Sumilizer BBM-S.

Similar effects were achieved even when 0.5 parts by mass of Irganox 1010 and 3.0 parts by mass of Sumilizer GP used in production of cellulose ester film were replaced by 0.5 parts by mass of Tinuvin 144, 3.0 parts by mass of Sumilizer GP, 0.5 parts by mass of Irganox 1010 and 0.25 parts by mass of ADK STAB LA-52.

EXAMPLE 3

Washed celulose esters C-3-1 through C-3-35 and cellulose ester pellets P-3-1 through P-32-35 were each prepared in the same manner as Example 1, except that washed cellulose esters, solvents, AO agents and their amounts were varied, as shown in Table 6. Using these cellulose ester pellets, cellulose ester film samples 3-1 through 3-35 (each having a film thickness of 80 μm) were prepared similarly to Example 1.

Table 6

| Washed cellulose Ester | Cellulose Ester | Solvent | Amount (part by mass) | Solvent (part by mass) | Amount (part by mass) | AO 1 (part by mass) | Amount (part by mass) | AO 2 (part by mass) | Amount (part by mass) | Remark |
|---|---|---|---|---|---|---|---|---|---|---|
| C-3-1 | C-1 | methanol | 500 | - | - | Tinuvin 144 | 0.5 | - | - | Inv. |
| C-3-2 | C-1 | methanol | 500 | - | - | Sanol LS-2626 | 0.5 | - | - | Inv. |
| C-3-3 | C-1 | methanol | 500 | - | - | Compound 3 | 0.5 | - | - | Inv. |
| C-3-4 | C-1 | methanol | 500 | - | - | Compound 19 | 0.5 | - | - | Inv. |
| C-3-5 | C-1 | methanol | 500 | - | - | Tinuvin 144 | 0.4 | Irganox 1010 | 0.1 | Inv. |
| C-3-6 | C-1 | methanol | 500 | - | - | Tinuvin 144 | 0.4 | Tinuvin | 0.1 | Inv. |
| C-3-7 | C-1 | methanol | 500 | - | - | Tinuvin 144 | 0.4 | PEP-36 | 0.1 | Inv. |
| C-3-8 | C-1 | methanol | 500 | - | - | Tinuvin 144 | 0.4 | Sumilizer TPL-R | 0.1 | Inv. |
| C-3-9 | C-1 | methanol | 500 | - | - | Sumilizer GP | 0.5 | - | - | Inv. |
| C-3-10 | C-1 | methanol | 500 | - | - | Compound 2 | 0.5 | - | - | Inv. |
| C-3-11 | C-1 | methanol | 500 | - | - | Sumilizer GP | 0.4 | Irganox 1010 | 0.1 | Inv. |
| C-3-12 | C-1 | methanol | 500 | - | - | Sumilizer GP | 0.4 | Tinuvin | 0.1 | Inv. |
| C-3-13 | C-1 | methanol | 500 | - | - | Sumilizer GP | 0.4 | PEP-36 | 0.1 | Inv. |
| C-3-14 | C-1 | methanol | 500 | - | - | Sumilizer GP | 0.4 | Sumilizer TPL-R | 0.1 | Inv. |
| C-3-15 | C-1 | heptane | 500 | - | - | Sumilizer GP | 0.5 | - | - | Inv. |
| C-3-16 | C-1 | octane | 500 | - | - | Sumilizer GP | 0.4 | Irganox 1010 | 0.1 | Inv. |

(continued)

| Washed cellulose Ester | Cellulose Ester | Solvent | Amount (part by mass) | Solvent (part by mass) | Amount (part by mass) | AO 1 (part by mass) | Amount (part by mass) | AO 2 (part by mass) | Amount (part by mass) | Remark |
|---|---|---|---|---|---|---|---|---|---|---|
| C-3-17 | C-1 | toluene | 500 | - | - | Sumilizer GP | 0.4 | PEP-36 | 0.1 | Inv. |
| C-3-18 | C-1 | diethyl ether | 500 | - | - | Tinuvin 144 | 0.5 | - | - | Inv. |
| C-3-19 | C-1 | diisopropyl ether | 500 | - | - | Tinuvin 144 | 0.4 | Tinuvin 770 | 0.1 | Inv. |
| C-3-20 | C-1 | ethanol | 500 | - | - | Tinuvin 144 | 0.4 | Sumilizer TPL-R | 0.1 | Inv. |
| C-3-21 | C-1 | butanol | 500 | - | - | Tinuvin 144 | 0.5 | - | - | Inv. |
| C-3-22 | C-1 | methanol | 480 | Tetrahydrofuran | 20 | Sumilizer GP | 0.4 | Tinuvin | 0.1 | Inv. |
| C-3-23 | C-1 | heptane | 450 | Acetone | 50 | Sumilizer GP | 0.4 | Tinuvin | 0.1 | Inv. |
| C-3-24 | C-2 | methanol | 500 | - | - | Sumilizer GP | 0.5 | - | - | Inv. |
| C-3-25 | C-2 | methanol | 500 | - | - | Sumilizer GP | 0.4 | Irganox | 0.1 | Inv. |
| C-3-26 | C-2 | methanol | 500 | - | - | Sumilizer GP | 0.4 | PEP-36 | 0.1 | Inv. |
| C-3-27 | C-3 | methanol | 500 | - | - | Tinuvin 144 | 0.5 | - | - | Inv. |
| C-3-28 | C-3 | methanol | 500 | - | - | Tinuvin 144 | 0.4 | Tinuvin | 0.1 | Inv. |
| C-3-29 | C-3 | methanol | 500 | - | - | Tinuvin 144 | 0.4 | Sumilizer TPL-R | 0.1 | Inv. |
| C-3-30 | C-1 | water | 500 | - | - | Sumilizer GP | 0.5 | - | - | Comp. |
| C-3-31 | C-1 | water | 500 | - | - | Sumilizer GP | 0.4 | 1010 | 0.1 | Comp. |

(continued)

| Washed cellulose Ester | Cellulose Ester | Solvent | Amount (part by mass) | Solvent (part by mass) | Amount (part by mass) | AO 1 (part by mass) | Amount (part by mass) | AO 2 (part by mass) | Amount (part by mass) | Remark |
|---|---|---|---|---|---|---|---|---|---|---|
| C-3-32 | C-2 | water | 500 | - | - | Sumilizer GP | 0.4 | PEP-36 | 0.1 | Comp. |
| C-3-33 | C-2 | water | 500 | - | - | Tinuvin 144 | 0.5 | - | - | Comp. |
| C-3-34 | C-3 | water | 500 | - | - | Tinuvin 144 | 0.4 | Tinuvin | 0.1 | Comp. |
| C-3-35 | C-3 | water | 500 | - | - | Tinuvin 144 | 0.4 | Sumilizer | 0.1 | Comp. |

Compounds shown in Table 6 are as follows:

Sanol LS-2626: production of SANKYO LIFETEC Co., Ltd.
Compound 2: 6-[3-(3,5-di-tert-butyl-4-hydroxyphenyl)propoxy]-2,4,8,10-tetrakis-tert-butylbenzo[d,f][1.3.2]dioxaphosphepin
Compounds 3 and 19 are as below.

Compound 3

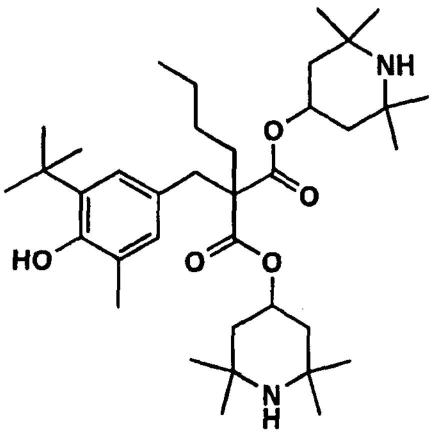

Compound 19

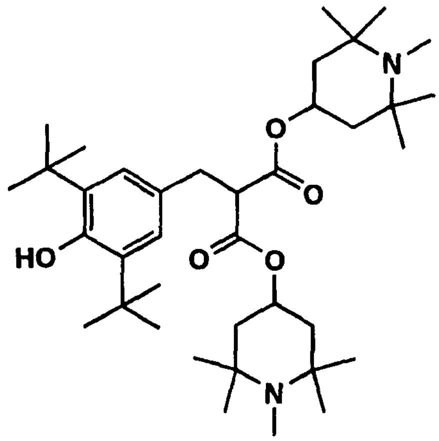

Similarly to Example 1, there were evaluated the total amount of free acids such as carboxylic acid derivatives and an acid catalyst such as sulfuric acid remaining in cellulose ester pellets and the prepared cellulose ester films, and evaluation results thereof are shown in Table 7.

Table 7

| Sample No. | Free Acid Content (ppm) | Retardation variation | Contrast | Remark |
|---|---|---|---|---|
| 3-1 | 5 | A | 810 | Inv. |
| 3-2 | 9 | B | 770 | Inv. |
| 3-3 | 9 | A | 720 | Inv. |
| 3-4 | 7 | A | 785 | Inv. |
| 3-5 | 5 | A | 790 | Inv. |
| 3-6 | 8 | B | 835 | Inv. |
| 3-7 | 6 | A | 820 | Inv. |
| 3-8 | 10 | A | 775 | Inv. |
| 3-9 | 13 | B | 770 | Inv. |
| 3-10 | 12 | A | 760 | Inv. |
| 3-11 | 14 | A | 725 | Inv. |
| 3-12 | 10 | A | 750 | Inv. |
| 3-13 | 13 | B | 780 | Inv. |
| 3-14 | 13 | B | 710 | Inv. |
| 3-15 | 17 | A | 795 | Inv. |
| 3-16 | 50 | A | 780 | Inv. |

(continued)

| Sample No. | Free Acid Content (ppm) | Retardation variation | Contrast | Remark |
|---|---|---|---|---|
| 3-17 | 41 | B | 800 | Inv. |
| 3-18 | 33 | B | 775 | Inv. |
| 3-19 | 20 | B | 810 | Inv. |
| 3-20 | 16 | A | 765 | Inv. |
| 3-21 | 19 | A | 790 | Inv. |
| 3-22 | 4 | B | 790 | Inv. |
| 3-23 | 1 | B | 800 | Inv. |
| 3-24 | 12 | A | 805 | Inv. |
| 3-25 | 11 | B | 815 | Inv. |
| 3-26 | 14 | A | 790 | Inv. |
| 3-27 | 5 | A | 900 | Inv. |
| 3-28 | 8 | A | 875 | Inv. |
| 3-29 | 9 | A | 860 | Inv. |
| 3-30 | 186 | E | 565 | Comp. |
| 3-31 | 174 | D | 535 | Comp. |
| 3-32 | 143 | E | 570 | Comp. |
| 3-33 | 160 | D | 605 | Comp. |
| 3-34 | 155 | C | 585 | Comp. |
| 3-35 | 102 | E | 590 | Comp. |

It is apparent from Table 7 that inventive samples 3-1 through 3-29 exhibit reduced free acid amounts, excel in retadation variation and front contrast as a polarizing plate and a liquid crystal display, and are optically excellent, as campared to comparative samples 3-30 through 3-35.

Similar effects were achieved even when the solvent used for washing cellulose ester was replaced by cyclohexane, toluene, dipropyl ether, propyl alcohol or diisopropyl ether.

Similar effects were achieved even when the antioxidant AO 1 used in washing cellulose ester was replaced by 0.4 parts by mass of any one of the following compound 2, compound 6, compound 12, compound 14, compound 15, compound 18, compound 26, compound 39 and compound 50, or a combination of 0.5 parts by mass of the foregoing compound having a phenol structure and a hindered amine structure in the molecule or the foregoing compound having a phenol structure and a phosphorus acid ester structure in the molecule and 0.1 parts by mass of any one of Irganox 1010, Tinuvin 770, ADK STAB PEP-36 and Sumilizer TPL-R.

Compound 2

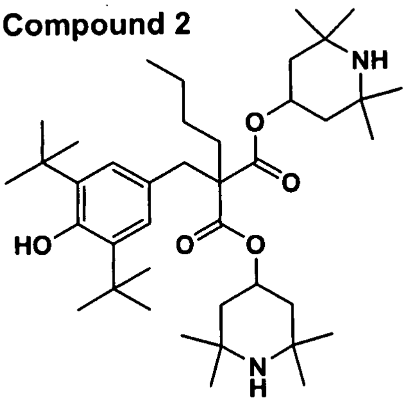

Compound 6

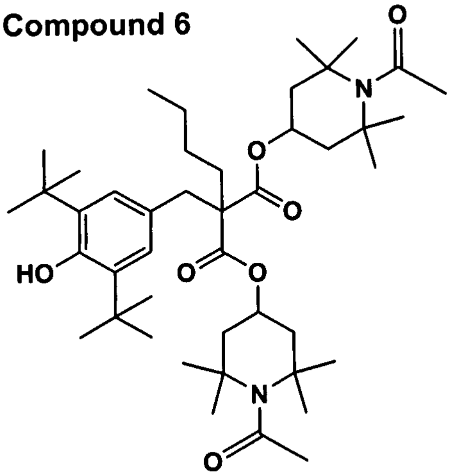

Compound 12

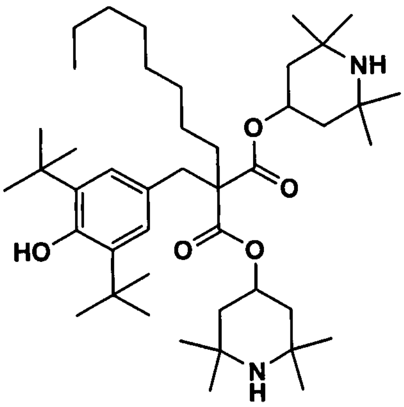

Compound 14

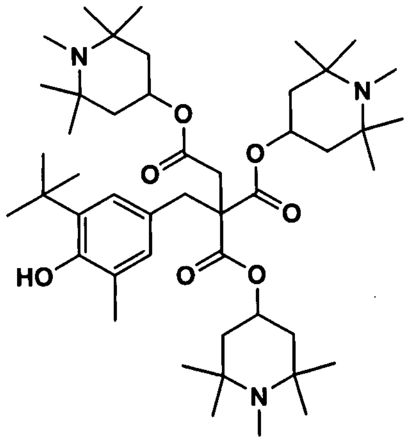

Compound 15

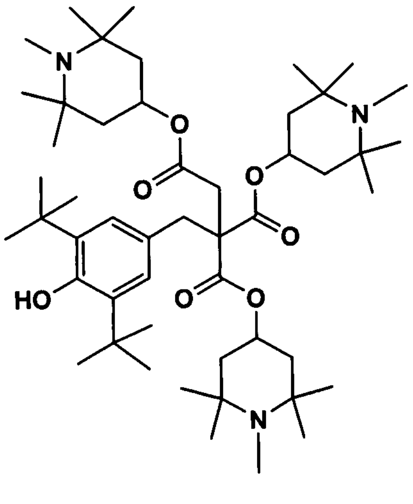

Compound 18

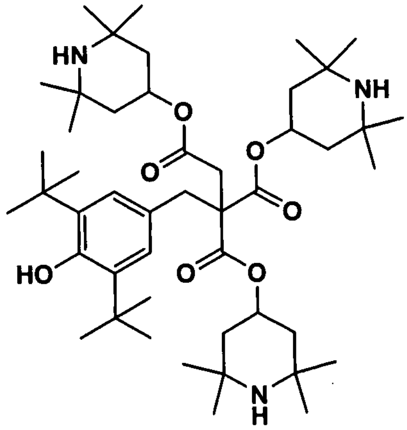

Compound 26

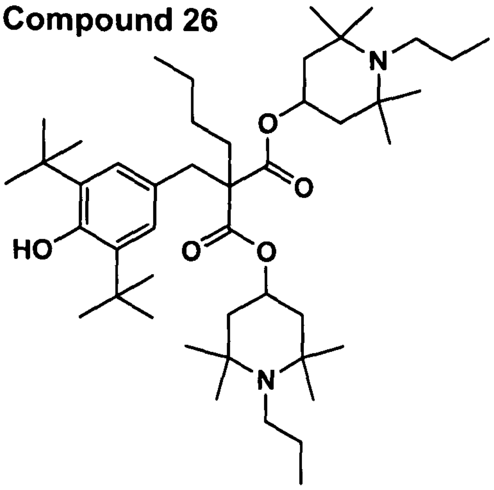

Compound 39

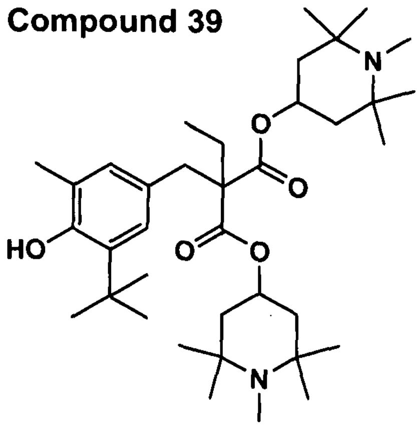

Compound 50

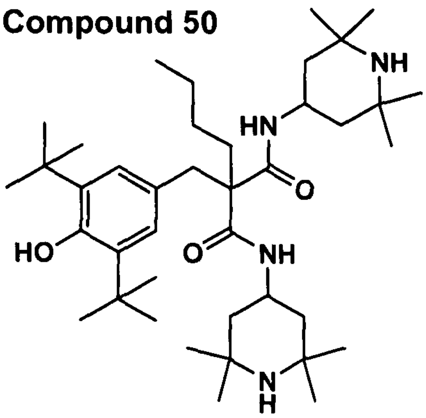

Similar effects were achieved even when 0.5 parts by mass of Irganox 1010 and 3.0 parts by mass of Sumilizer GP used in the foregoing production of cellulose ester film were replaced by 0.5 parts by mass of Tinuvin 144, 3.0 parts by mass of Sumilizer GP, 0.5 parts by mass of Irganox 1010 and 0.25 parts by mass of ADK STAB LA-52. Further, similar effects were also achieved by being replaced by 0.5 parts by weight of Irganox 565, Irganox 3114, ADK STAB AO-330, ADK STAB AO-30 and ADK STAB AO-40.

## Claims

1. A composition to form a film by melt-casting, wherein the composition contains a cellulose ester in an amount of not less than 50% by mass and has a free acid content of not more than 50 ppm.

2. The composition as claimed in claim 1, wherein the cellulose ester has a free acid content of 1 to 20 ppm.

3. A method of producing an optical film, the method comprising melt-casting a composition as claimed in claim 1 or 2 to form a film.

4. An optical film, wherein the optical film is produced by a method as claimed in claim 3.

5. A polarizing plate, wherein an optical film as claimed in claim 4 is adhered onto one surface of the plate.

6. A liquid crystal display apparatus, wherein the liquid crystal display apparatus uses at least one of an optical film as claimed in claim 4 and a polarizing plate as claimed in claim 5.

**INTERNATIONAL SEARCH REPORT**

International application No.
PCT/JP2006/323506

A. CLASSIFICATION OF SUBJECT MATTER
*C08L1/10*(2006.01)i, *B29C47/14*(2006.01)i, *C08J5/18*(2006.01)i, *G02B5/30* (2006.01)i, *G02F1/1335*(2006.01)i, *B29K1/00*(2006.01)n, *B29L7/00*(2006.01)n, *B29L11/00*(2006.01)n

According to International Patent Classification (IPC) or to both national classification and IPC

B. FIELDS SEARCHED

Minimum documentation searched (classification system followed by classification symbols)
C08L1/10-1/14, B29C47/14, C08J5/18, G02B5/30, G02F1/1335, B29K1/00, B29L7/00, B29L11/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2002-131536 A (Konica Corp.), 09 May, 2002 (09.05.02), Claims; Par. No. [0023] (Family: none) | 1-6 |
| A | JP 2003-279729 A (Konica Corp.), 02 October, 2003 (02.10.03), Claims; examples (Family: none) | 1-6 |
| P,X | JP 2006-188663 A (Konica Minolta Opto, Inc.), 20 July, 2006 (20.07.06), Claims; Par. Nos. [0094] to [0095] & US 2006127607 A1 | 1-6 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 05 January, 2007 (05.01.07) | 16 January, 2007 (16.01.07) |
| Name and mailing address of the ISA/ Japanese Patent Office | Authorized officer |
| Facsimile No. | Telephone No. |

Form PCT/ISA/210 (second sheet) (April 2005)

**INTERNATIONAL SEARCH REPORT**

International application No.
PCT/JP2006/323506

C (Continuation). DOCUMENTS CONSIDERED TO BE RELEVANT

| Category* | Citation of document, with indication, where appropriate, of the relevant passages | Relevant to claim No. |
|---|---|---|
| P,X | JP 2006-113567 A (Konica Minolta Opto, Inc.), 27 April, 2006 (27.04.06), Claims; Par. Nos. [0036], [0053] to [0054] & US 2006062935 A1 | 1-6 |
| P,X | JP 2006-113175 A (Konica Minolta Opto, Inc.), 27 April, 2006 (27.04.06), Claims; Par. Nos. [0030], [0056] to [0057] & US 2006078754 A1 | 1-6 |
| P,X | JP 2006-117714 A (Konica Minolta Opto, Inc.), 11 May, 2006 (11.05.06), Claims; Par. Nos. [0063] to [0064] (Family: none) | 1-6 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 10095861 A
- JP 2003192920 A
- JP 2003012823 A
- JP 2003096236 A
- JP 11222493 A
- JP 8134101 A
- JP 6501040 W
- JP 2000352620 A
- JP 58022510 A
- JP 6504010 A
- JP 2003252901 A
- JP 53015165 B
- JP 10298201 A
- US 4839405 A
- US 4137201 A
- JP 10182621 A
- JP 8337574 A
- JP 6148430 A
- EP 911656 A2


### Non-patent literature cited in the description


- **J.N. ISRAELACHIBIRI.** Intermolecular Force and Surface Force. McGraw-Hill, 1991